Europäisches Patentamt

European Patent Office

Office européen des brevets

(19)

(11)  **EP 1 235 146 A2**

(12)  **EUROPEAN PATENT APPLICATION**

(43) Date of publication:
28.08.2002  Bulletin 2002/35

(51) Int Cl.⁷: $G06F\ 9/44$

(21) Application number: 02004426.9

(22) Date of filing: 04.02.1999

(84) Designated Contracting States:
AT BE CH CY DE DK ES FI FR GB GR IE IT LI LU
MC NL PT SE

(30) Priority: 04.02.1998  US 73766 P
03.02.1999  US 244333

(62) Document number(s) of the earlier application(s) in
accordance with Art. 76 EPC:
99905745.8 / 1 053 523

(71) Applicant: **Interwoven, Inc.**
**Sunnyvale, CA 94087 (US)**

(72) Inventors:
• **Nakano, Russel**
**Sunnyvale, CA 94087 (US)**
• **Yee, Terrence, T. W.**
**Saratoga, CA 95070 (US)**

• **Park, Britt H.**
**Mountain View, CA 94043 (US)**
• **Barr, Sanford L.**
**Sunnyvale, CA 94089 (US)**
• **Jia, Jack S.**
**San Jose, CA 95120 (US)**
• **Hegde, Gajanana**
**San Jose, CA 95120 (US)**
• **Cochrane, Kevin**
**Palo Alto, CA 94306 (US)**

(74) Representative: **Betten & Resch**
**Patentanwälte,**
**Theatinerstrasse 8**
**80333 München (DE)**

Remarks:
This application was filed on 26 - 02 - 2002 as a
divisional application to the application mentioned
under INID code 62.

(54)  **System and method for website development**

(57)  A System and method for file management is
comprised of hierarchical files systems, referred to as
"areas". There are three types of areas: work areas,
staging areas, and edition areas. A work area is a modifiable file system, and, in a work area a user can create,
edit, and delete files and directories. A staging area is
a read-only file system that supports select versioning
operations. Various users of work areas can integrate
their work by submitting the contents of their work area
to the staging area. In the staging area, developers can
compare their work and see how their changes fit to-
gether. An edition is a read-only file system, and the con-
tents of a staring area are virtually copied into an edition
to create a frozen, read-only snapshot of the contents
of the staging area. One use of the system and method
for file management is as a website development tool.

FIG. 2

EP 1 235 146 A2

## Description

### RELATED APPLICATIONS

This application claims the benefit of U.S. Provisional Application No. 60/073,766, filed on February 4, 1998, and titled "System and Method for Website Development," the contents of which are incorporated by reference as if fully disclosed herein.

### BACKGROUND OF THE INVENTION

#### 1. Field of the Invention

The present invention relates generally to hierarchical file systems and, more specifically, to a system and method for file management which can be used as a website development tool.

#### 2. Description of the Background Art

The Internet is playing a large role in commerce, and most companies tend to have a website. Many websites need to be frequently modified, and they are usually modified in an ad hoc process by scores of contributors. Consequently, the on-going process of keeping website content up to date, accurate, and well-integrated is often a greater challenge than the initial planning and development phase. Internet sites may be updated by the day, hour, or minute, by teams numbering in the hundreds. Similarly, intranet content contributors constantly submit new content or make changes to existing content, and, unless new content is quickly integrated, the intranet's usefulness as a fundamental communications resources is limited.

Large websites face many problems as the number of web contributors increase exponentially. The volume and content of these sites is increasing rapidly, and sites must be updated more frequently as site traffic and Internet commerce grows. With the increasing number of contributors, volume, and complexity of content, it has becomes increasingly more difficult for the manager of the website ("the webmaster") to oversee every change and perform quality control.

Because of the complexity of website development, there is a need for a central system to manage and control website development. Known systems for managing and controlling website development include software configuration management systems, document management systems, and database publishing systems.

There are several disadvantages associated with such known website development systems. For instance, because maintaining a website often requires the efforts of tens or hundreds of people, it is desirable to have website contributors work in parallel. Software configuration management systems do not allow contributors to simultaneously make changes to the same area of a website. Moreover, none of the known systems allow contributors working in parallel to separately test their own work without actually making a change to the website. Thus, conflicting changes may be posted to a website causing the website to be corrupted.

Since contributors cannot foresee on an individual level the effects of their work when combined with other's contributions, known systems rely on a webmaster to integrate all changes posted to a website and check the changes for errors. A webmaster also ensures that contributors only change content they are authorized to change. - However, the webmaster often becomes a bottleneck for the website development process because the webmaster must do all the integration and testing of changes to a website. Integrating the work of multiple users is manual and time consuming, and a great deal of time is wasted on bug fixing and resolving conflicts, while too little time is invested in design, innovation, and strategy. Moreover, a webmaster cannot easily oversee a contributors progress on a change until the contributor is ready to submit the change to the webmaster. Thus, the webmaster cannot correct errors early on and cannot determine how contributors are progressing.

Another disadvantage of known website development systems is that they do not track file version histories. Since website files are continually added, removed, changed, moved, and renamed, it is useful to know who made what version of a file and when the version was made. With full access to prior versions, users can easily find the changes that caused a bug, revert to previous versions, and identify new bugs. Additionally, known website developments systems do not allow immediate access to any previous version of a site subsection or the entire site. The ability to immediately roll back to any previous version of a website can be a vital disaster recovery tool in the event of site corruption or the distribution of inappropriate or inaccurate information.

Therefore, it is desirable to have a web development system that allows contributors to determine how their changes fit into the entire website without actually posting the changes to the website. Additionally, it is desirable to have a web development system that allows contributors to access an earlier version of a file, website subsection, or website and that allows a webmaster to check on the progress of contributors, as well as more easily post changes to a website.

### SUMMARY OF THE INVENTION

The present invention provides a system and method for file management as defined in claims 1 to 15. One use of such a system is as a website development tool.

The system of the present invention is comprised of hierarchical file systems, which are referred to herein as "areas." There are two types of areas: work areas and staging areas. A work area is a modifiable file system, and, in a work area a user can create, edit, delete, add, and modify files and directories. In one embodiment, a work area is a virtual copy of an existing website and a user's personal view of the website.

A staging area is a read-only file system that supports select versioning operations. Various users of work areas can integrate their work by submitting the contents of their work areas to the staging area. In the staging area, developers can compare their work and see how their changes fit together.

An edition area is a read-only file system. Contents of a staging area are virtually copied into an edition area to create a frozen, read-only snapshot of the contents of the staging area. In one embodiment the contents of an edition area represent the contents of an edition of a website.

In one embodiment, areas share directory trees so that directories and files do not have to be physically copied each time an area is created. This allows areas to be created quickly and provides for efficient use of system resources. Associated with each file and directory is a history object that stores information on the contents of that file or directory in each area in which that file or directory exists.

In another embodiment, the present invention tracks the history of the contents of each file and directory. This allows the system to easily compare one file with another file or one directory with another directory and identify whether they are identical or related.

In yet another embodiment, the system of the present invention includes an HTTP protocol virtualization module which enables one web server to operate as if it were multiple web servers. This allows each area to be a complete website at the HTTP protocol level without having a separate web server for each area.

**BRIEF DESCRIPTION OF THE DRAWINGS**

Figure **1** illustrates a computer network for website development according to one embodiment of the present invention.

Figure **2** illustrates the development flow (from the perspective of a developer) for developing website content according to one embodiment of the present invention.

Figure **3** illustrates an example of a branch according to one embodiment of the present invention.

Figure **4** illustrates an example of the initial contents of a main branch according to one embodiment of the present invention.

Figure **5** illustrates an example of a main branch according to one embodiment of the present invention.

Figure **6** illustrates another example of a main branch according to one embodiment of the present invention.

Figure **7** illustrates an example of a main branch and a sub-branch according to one embodiment of the present invention.

Figure **8** illustrates an example of a directory tree of an area according to one embodiment of the present invention.

Figure **9** is a pictorial representation of a work area object according to one embodiment of the present invention.

Figure **10** illustrates a method for deriving a generation ID according to one embodiment of the present invention.

Figure **11** illustrates an example of a genealogy tree according to one embodiment of the present invention.

Figure **12** is a pictorial representation of a directory according to one embodiment of the present invention.

Figure **13** illustrates a website development module according to one embodiment of the present invention.

Figure **14** illustrates an operation of a work area creation module according to one embodiment of the present invention.

Figure **15** illustrates an operation of a staging area creation module according to one embodiment of the present invention.

Figures **16a-b** illustrate an operation of an edition creation module according to one embodiment of the present invention.

Figures **17a-c** illustrate an operation of a branch creation module according to one embodiment of the present invention.

Figures **18a-d** illustrate an operation of an add item module according to one embodiment of the present invention.

Figure **19** illustrates an operation of an add direct reference module according to one embodiment of the present invention.

Figure **20** illustrates an operation of a remove direct reference module according to one embodiment of the present invention.

Figures **21a-b** illustrate an operation of a reference count module according to one embodiment of the present invention.

Figure **22** illustrates an operation of a read directory module according to one embodiment of the present invention.

Figures **23a-b** illustrate an operation of a remove item module according to one embodiment of the present invention.

Figures **24a-b** illustrate an operation of an edit file module according to one embodiment of the present invention.

Figure **25** illustrates an operation of the rename module according to one embodiment of the present invention.

Figures **26a-b** illustrate an operation of the generate directory path module according to one embodiment of the present invention.

Figure **27** illustrates the operation of a generate base name module according to one embodiment of the present invention.

Figures **28a-c** illustrate the operation of a submit module according to one embodiment of the present invention.

Figure **29** illustrates the operation of a conflict checking module according to one embodiment of the present invention.

Figures **30a-b** illustrate the operation of a compare directory module according to one embodiment of the present invention.

Figures **31a-b** illustrate the operation of a compare file module according to one embodiment of the present invention.

Figure **32** illustrates the operation of an area deletion module according to one embodiment of the present invention.

Figures **33a-b** illustrate an operation of a lock module according to one embodiment of the present invention.

Figure **34** illustrates another operation of the lock module according to one embodiment of the present invention.

Figure **35** illustrates a communication path between a web browser, a HTTP protocol virtualization module, and a web server, according to one embodiment of the present invention.

Figures **36a-b** illustrate an operation of the HTTP protocol virtualization module according to one embodiment of the present invention.

Figures **37** illustrates another operation of the HTTP protocol virtualization module according to one embodiment of the present invention.

Figure **38** illustrates yet another operation of the HTTP protocol virtualization module according to one embodiment of the present invention.

## DETAILED DESCRIPTION OF THE PREFERRED EMBODIMENTS

The present invention(s) will be described with respect to website development, but as will be understood by those familiar with the art, the invention(s) may be embodied in other specific forms.

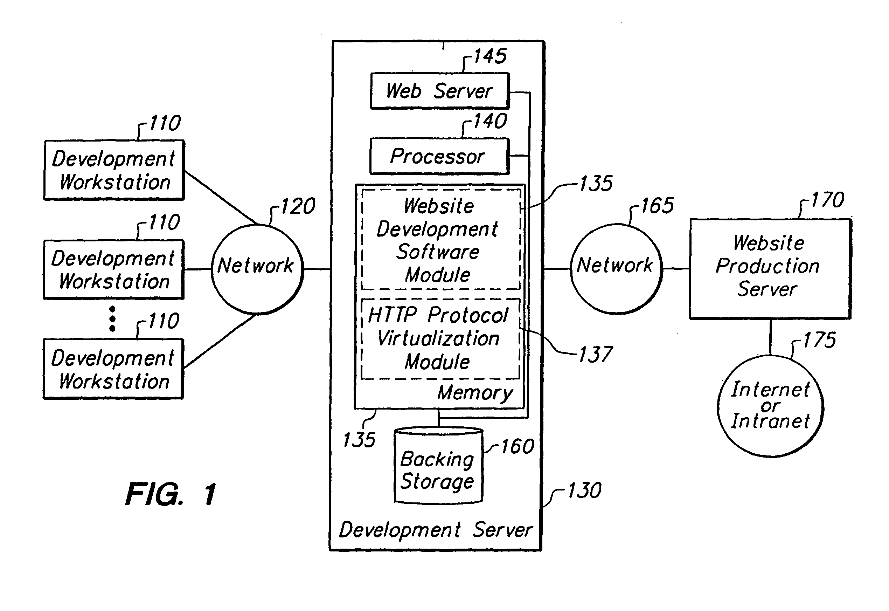

Figure **1** illustrates a computer network **100** for website development. On development workstations **110,** which may be conventional personal computers, website developers add, remove, edit, and examine files for a website. The development workstations **110** are connected to a development server **130** via a computer network **120,** such as the Internet.

The development server includes a web server **145,** which processes HTTP requests from the development stations **110** for website content. The development server **130** also includes a conventional backing storage **160,** such as the WINDOWS NT file system commercially available from Microsoft Corporation, in which website files are physically stored.

The development server **130** also includes a conventional memory **150** (e.g., RAM) and a conventional processor **140,** which implements the website development methods of the present invention by executing a website development-software module **135.** The website development module, which is described below, is stored in the memory **150.** Also stored in the memory **150** is a HTTP protocol virtualization module **137** which, as discussed below, the processor **140** executes to allow web server **145** to operate as if it were multiple web servers.

The development server **130** is coupled to a production webserver **170** via a network **165.** Network **165** may be the same network as network **120** or it may be a different network. The website production web server **170** is coupled to the Internet or an intranet **175,** and when a website is ready to be posted on the World Wide Web or on an intranet, the development server **130** sends the website to the production webserver **170,** which provides Internet or intranet access to the website.

A website is comprised of the contents of an arbitrary file system. The website development system of the present invention is comprised of a collection of hierarchical file systems. Each of these file systems is an environment that manages individual files and provides means to manipulate them. When executed, the website development software module **135** is the part of the file system that enables most of the management and manipulation of files. The backing storage **160** is where the files and corresponding metadata (e.g., owner identification, group identification, access control file name, modification times, creation times, etc.) are physically stored. In one embodiment, the files can appear to be stored on drives other than the backing storage **160** (even though they are physically stored in the backing storage **160**).

A hierarchical file system comprises a tree of directories, populated with files and symbolic links. At the top of the directory tree is a root directory, from which all other directories directly or indirectly stem.

A file system may be modifiable or read-only. A modifiable file system is a file system that supports read operations (e.g., get root directory, read directory, look up directory, read file, get attributes, read symbolic link, and etc.) and modify operations (e.g., create directory, create file, create symbolic link, set attributes, remove file, remove directory, rename file, rename directory, write file, and etc.) on the files. A typical hard drive volume is an example of a modifiable file system.

A read-only file system supports only read operations. Two examples of a read only file system are a CD ROM volume and a floppy disk volume that has the write-tab flipped to the write-protected position.

As stated above, the website development system of the present invention is comprised of hierarchical file systems. Some of the hierarchical files systems are modifiable to enable the creation of the files that make up the content of a website. Others enable files from other files systems to be compared to coordinate the website development, and yet others include the finished files that make up the content of the website.

One way in which the hierarchical files systems of the present invention are distinct from conventional file systems is that, in addition to read and/or modify operations, some of the file systems in the present invention support select versioning operations, which will be discussed below, that enable manipulations of two or more related file systems. The contents of a website are created by performing read, modify, and versioning operations on a collection of related file systems in the present invention.

A hierarchical file system of the present invention is referred to as an "area", and there are three types of areas: work areas, staging areas, and edition areas. A work area is a modifiable file system, whereas staging and edition areas are read-only file systems.

A *work area* starts out as a virtual copy of an existing website (unless there is no existing website, in which case the work area starts out empty). In other words, a work area starts out having the same contents as the file system designated as the website. A work area is a developer's personal view of a website, and every developer contributing to a website does so in a work area. In a work area, developers can freely add, delete, or modify website content and see how their changes fit into the context of the entire website. Details of add, delete, and modify operations are discussed below. Changes made by a contributor in one work area do not affect the website or the work of other contributors in other work areas. This is because, as stated below, each area is a separate file system.

Developers integrate their work in a staging area by submitting the contents of their work areas into a *staging area.* The submit operation is one of the select versioning operations referenced above and discussed in more detail below. The staging area is a shared view of the website available to all users on a branch (branches are discussed below). In other words, a staging area is a file system that is accessible to all users along a branch. A staging area holds the collective work of several developers' work areas and allows the developers to share and integrate their changes. In a staging area, the developers can compare their work and see how their changes fit together. The compare operation is another one of the select versioning operations discussed in more detail below.

The collective work in a staging area can be virtually copied back to the private work areas to keep the work areas up-to-date with the current state of the staging areas, which changes as different contributors submit new content from work areas. The copying is "virtual" because areas share directory trees so that the directory trees do not have to be physically copied. When the collective work in a staging area is deemed final, its contents can be published to create an edition of the website. Creating a work area from an edition and publishing a staging area are additional ones of the select versioning operations discussed below.

The contents of a staging area are virtually copied into an *edition area* to create an edition of a website. Again, virtually copying means that the edition references the same directory tree as the staging area. Because an edition is a read-only file system, it is a frozen snapshot of the content of the entire website at a particular point along a single branch. Each edition is archived and accessible to all developers.

The contents of editions can be virtually copied back into work areas and used as the basis for further development of the website. Editions also serve as archives, allowing users to instantly recall files, entire directories, or reconstruct entire past versions of the website.

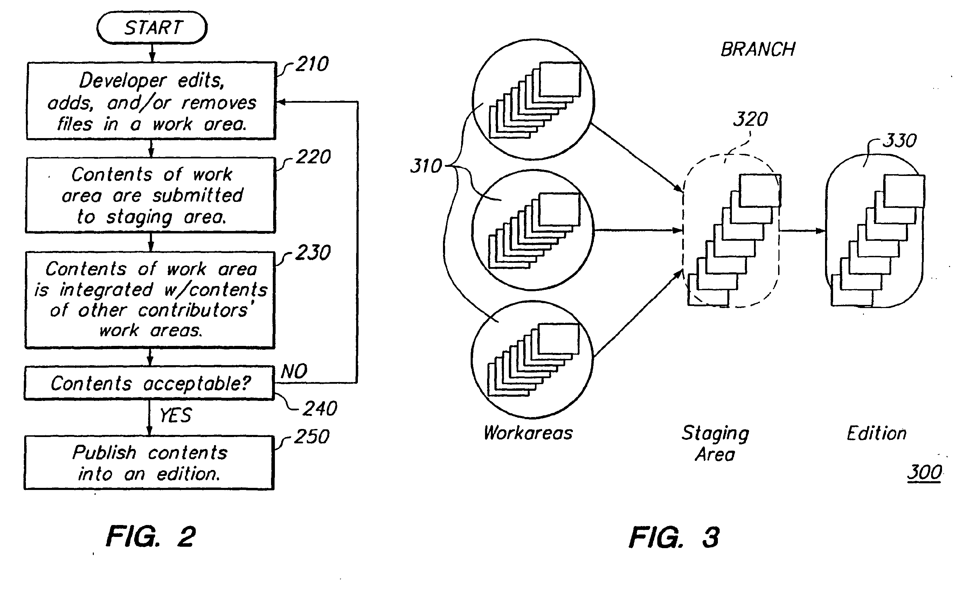

Figure **2** summarizes the development flow from a work area to an edition from the perspective of a developer. A developer edits, adds, or deletes **210** files in a work area. The developer then submits **220** the contents of his work area to the staging area. In the staging area, the contents of the contributor's work area is integrated **230** with the contents of other contributors' work areas. If all the contents submitted to the staging area integrate well and are approved **240,** the contents of the staging area are published **250** into an edition. Otherwise, the contributors continue to edit **210** their files until they are approved.

According to one embodiment, website development can be divided along several branches of development. From a developer's perspective, a branch is a path of development for a single website. As illustrated in Figure **3**, a single branch **300** includes work areas **310,** a staging area **320,** and one or more archived website editions **330.** Branches can include sub-branches, so that development teams may keep alternate paths of development separate from each other. Content can be shared across branches and sub-branches.

An example of dividing website development along branches is to have one branch for the current website and have another branch for a new version of the website. Another example is to have a different branch of development for different regions or for different clients in order to have websites tailored to particular regions or clients.

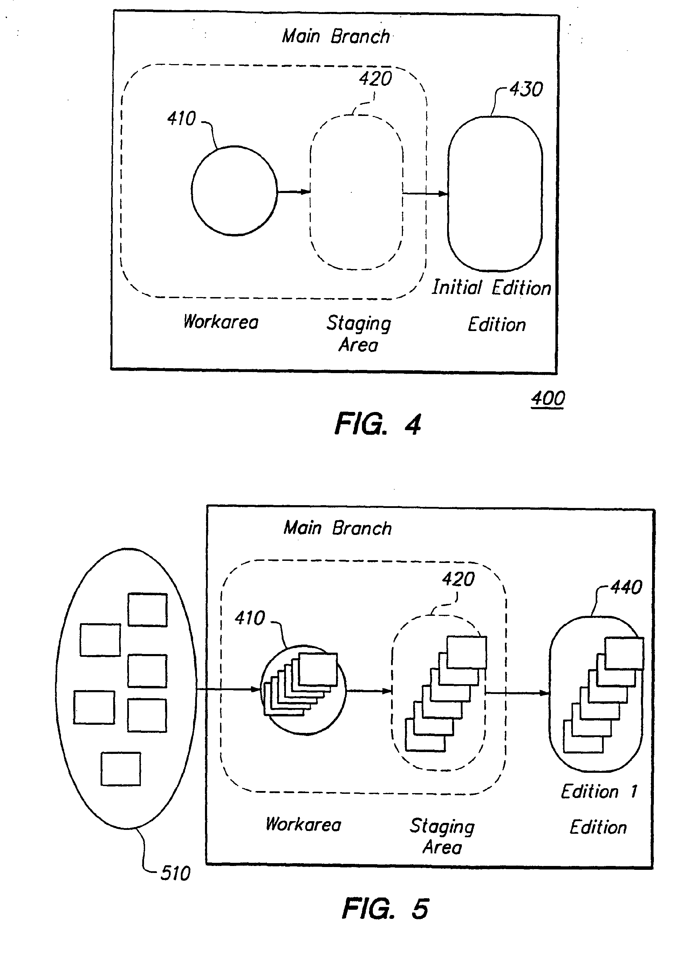

A main branch is created when the website development software module is installed on the development server. As illustrated in Figure **4**, a main branch **400** initially include an empty staging area **420** and empty edition **430.** A main branch may also initially include an empty work area **410.** A work area can be created at the time the main branch is created or at a later time, as a user may desire to delay creating the work area until the user is ready to define the attributes of the work area (*e.g.*, the people that can access the work area).

If a website existed before the website development software module is installed, then an empty work area **410** is created if it does not already exist. As shown in Figure **5,** the contents **510** of the original website are copied into the empty work area **410,** then the empty staging area **420,** and then are published into an initial edition **440.**

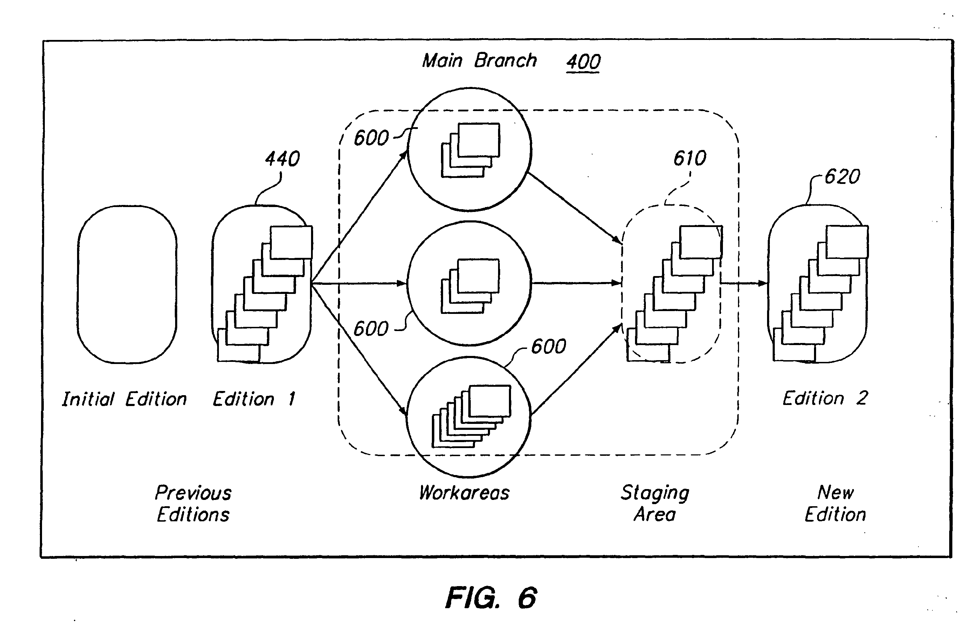

Additional work areas can be created off the main branch by virtually copying the contents of the most recent edition into the new work areas. Figure **6** illustrates the creation of three work areas **600** on the main branch from edition **440.** The contents of work areas **600** are submitted to a staging area **610,** and the contents of staging area **610** are published into a new edition **620.**

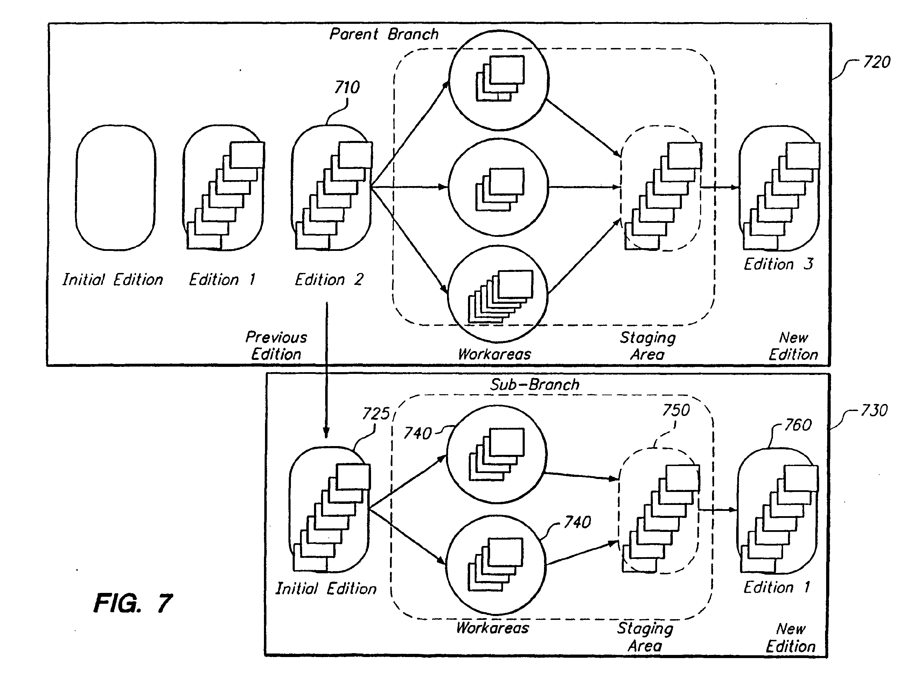

Sub-branches can also be created off a main or other branch. Figure **7** illustrates the creation of a sub-branch off a main branch. An edition **710** from the parent branch **720** is used as the initial edition **725** for the sub-branch **730.** The contents of the initial edition **725** are then virtually copied into work areas **740,** staging area **750,** and new edition **760** in the sub-branch **730.** Note that sub-branches can be created off of other sub-branches in the same manner. Work done on a sub-branch occurs independently from and in parallel to work done on a higher branch.

Work created on a sub-branch can be incorporated into a higher level branch by virtually copying the contents of an edition on the sub-branch back into a work area on the higher branch. Content from the sub-branch will be integrated with the content from other work areas and published as a new edition on the higher branch.

Now that an overview and typical usage of the website development system has been described, the specific implementation of the system, according to one embodiment, will be described.

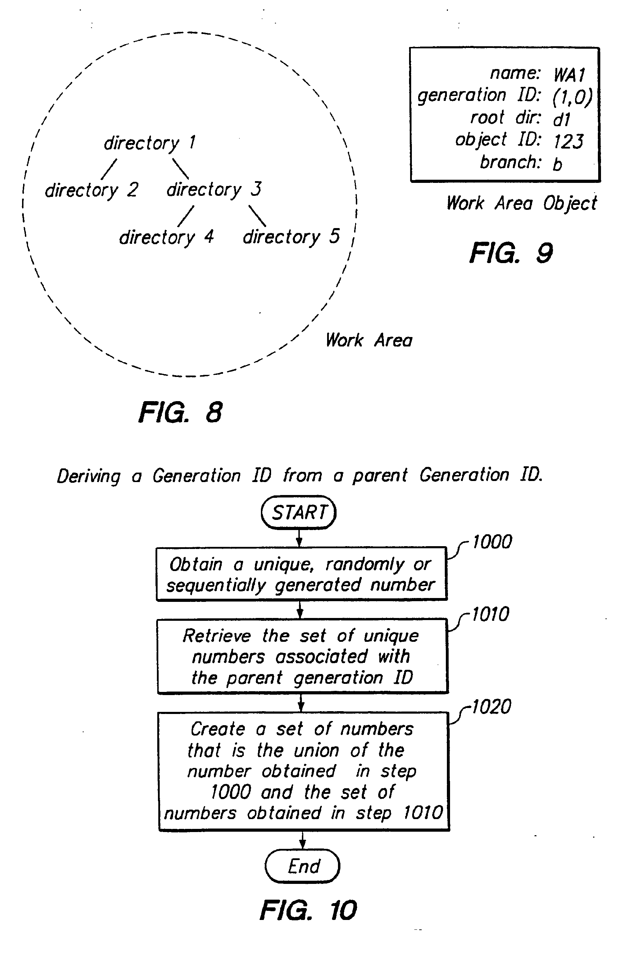

Each separate work area, staging area, and edition area is comprised of one or more files and directories organized in a tree structure. Figure **8** illustrates an example of a directory tree for an area, where directory 1 is the root directory. Areas can share the same directory tree. In fact, when an existing area is copied to make a new area, the new area merely references the same root directory as the existing area.

Each separate work area, staging area, and edition area is created by creating an object that represents the area and that has a name field, an object ID field, a generation ID field, a directory field, and a branch field. The name field includes the name of the work area. The directory field identifies the root directory of the directory tree of the particular work area, staging area or edition area. The branch field indicates the branch along which the work area lies. Figure **9** illustrates a pictorial representation of a work area object. Note that in creating a work area a virtual copy of the directory tree is made, as opposed to a real copy, because the work area object points to the existing directory tree.

Each work area, staging area, and edition area has two unique identifiers, one of which is referred to in this application as a "generation ID," and the other of which is referred to as an "object ID." The object ID identifies the object that represents the area, and, once an object ID is assigned to an object, that object ID is not changed. Each area is also identified by a unique generation ID, which indicates how an area is related to other areas. The generation ID for a particular area can be changed, as will be discussed below (e.g., when a staging area is published into an edition). The generation ID is placed in the generation ID field. The object ID is placed in the object ID field.

Note that directories, files, history objects (discussed below), and other objects are also assigned object IDs which remain unchanged once assigned.

A generation ID is comprised of a unique sequence or set of numbers. A generation ID not only uniquely identifies an area, but, as stated above, also indicates how an area is related to other areas.

An area is related to another area if one of the areas is derived, directly or indirectly, from the other area. For example, in Figure **7** the initial edition in the sub-branch is directly derived from edition 2 in the parent branch. The work areas in the sub-branch are directly derived from the initial edition in the sub-branch and indirectly derived from edition 2 in the parent branch.

A generation ID includes a number unique to it and the numbers of the generation IDs from which the generation ID is derived. For instance, if the number 1 is the unique number assigned to one area and if the number 0 is the unique number assigned to another area, then the generation ID of an area derived from these areas is its own unique number, say 4, as well as the numbers 0 and 1.

Figure **10** illustrates the method for deriving a generation ID, which is to be assigned to a new area, from a parent generation ID, where the parent generation ID is assigned to the direct parent of the new area. A unique number is obtained **1000** using a conventional algorithm for sequentially (e.g., 1, 2, 3, 4) or randomly generating unique numbers. The set or sequence of unique numbers associated with the parent generation ID is then retrieved **1010.** Subsequently, a set or sequence of numbers that is the concatenation of the parent generation ID and the just issued unique number is created **1020.**

The relationship between the areas is also represented by a genealogy tree. A genealogy tree is a data structure, where each node of the tree represents a different generation (i.e., area. Note that throughout this application areas are often referred to as generations).

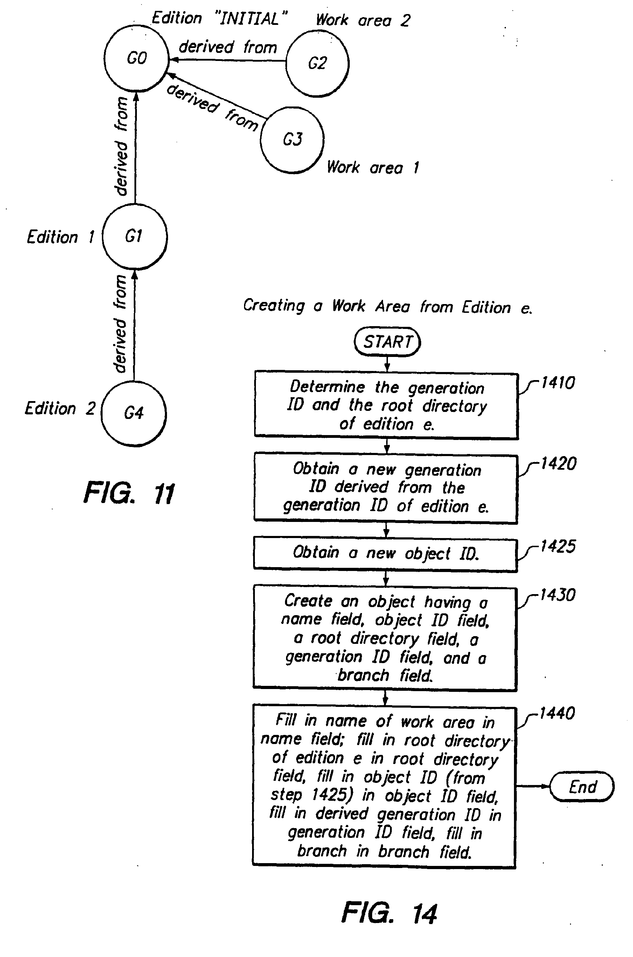

Figure **11** illustrates an example of a genealogy tree. The generation G0 represents the initial edition. Generation G2 represents one work area ("work area 1"), generation G3 represents another work area ("work area 2"), generation G1 represents an edition ("edition 1"), and generation G4 represents a staging area. The genealogy tree illustrates that G1, G2, G3 are directly derived from G0, which means that G1, G2, and G3 have the same root directory as G0. G4 is indirectly derived from G0 and directly derived from G1 and, therefore, also has the same root directory as G0.

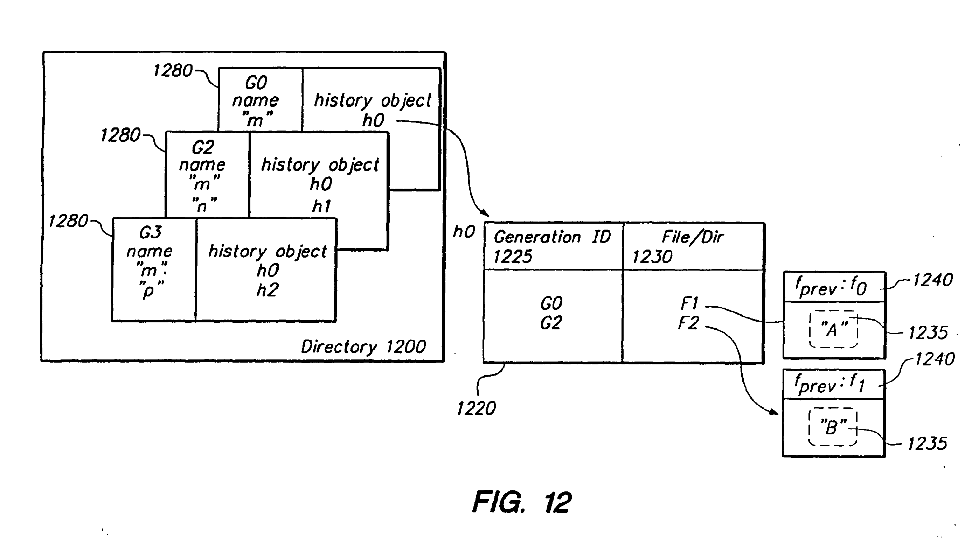

Figure 12 illustrates a pictorial representation of a directory **1200**. For each generation in which the directory has been altered, the directory includes a generation page **1280**, which is an object that lists the contents of the directory in the generation corresponding to the generation page **1280**. Thus, a directory effectively includes a snapshot of the contents of the directory at each generation in which the directory has been altered. Generation pages **1280** allow different areas to reference the same directory, even though the directory may have different contents in different areas.

In the directory **1200** illustrated in Figure **12**, the directory pages **1280** indicate that item "m" was added to the directory **1200** in generation G0, that item "n" was added to the directory **1200** in generation G2, and that "p" was added to the directory **1200** in generation G3. Note that, assuming nothing has been removed from the directory **1200,** the directory pages **1280** include not only the contents that were added in a particular generation, but also the contents that were added in the generations from which the particular generation was derived. For instance, assume that the genealogy tree illustrated in Figure **10** applies to this example. In generation G0, directory d1 contains item "m." In generation G2, item "n" is added to directory **1200,** and, therefore, since G2 was derived from G0, directory **1200** contains items "m" and "n" in generation G2 (assuming "m" was not removed). In generation G3, item "p" is added to directory d1, and, therefore directory **1200** includes the items "p" and "m." Note that G3 was not derived from G2, and, consequently, directory **1200** does not include item "n" in generation G3.

In one embodiment, if a directory has *not* been altered in a particular generation, the directory will *not* include a generation page for that generation. Once a directory is altered in a generation, a generation page for the generation is added to the directory.

Each item in a directory is associated with a history object. A history object indicates the generation in which the contents of a file or directory were edited or modified. In other words, a history object indicates the history of an item in a directory. A history object includes a field **1225** for a generation ID and a contents field **1230** for a pointer to a file or a directory. In the example illustrated in Figure **12**, history object h0 indicates that in generation g0, item n contains the contents associated with file f1. History object h0 also indicates that in generation G2 item n contains the contents associated with file f2 (and *not* file f1). The items listed in the contents field **1230** point to the actual contents **1235** of file f2. If f2 were a directory, it would point to another directory like directory **1200.** The contents include a "previous field" **1240** that has a pointer to the preceding file or directory associated with the item listed in the directory. For instance, f2 points to a file having contents, "B," as well as a pointer **1240** to f1, meaning that prior to generation G2, item "m" had the contents of f1.

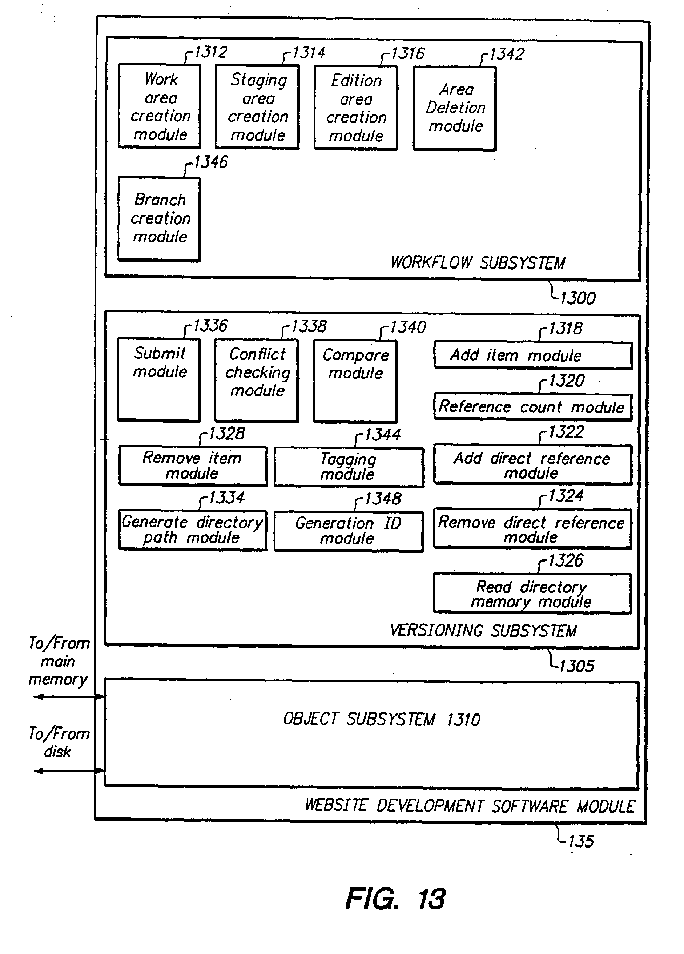

Figure **13** illustrates the website development software module **135** according to one embodiment of the present invention, which enables the creation and manipulation of the work, staging, and edition areas. The website development software module **135** includes a workflow subsystem **1300**, a versioning subsystem **1305**, and an object subsystem **1310**. The workflow subsystem creates and manages work areas, staging areas, edition areas, and branches. The versioning subsystem manages and controls functions such as modifying and editing files and directories, comparing files, comparing directories, submitting the contents of a work area to a staging area, and checking files and directories for conflict The object subsystem manages the distribution of objects in the main memory of the server and in the disk. The object subsystem may be implemented as a conventional persistent object storing and caching subsystem.

The work flow subsystem includes a work area creation module **1312**, a staging area creation **1314** module, an edition area creation module **1316,** a branch creation module **1346,** and an area deletion module **1342.** The versioning subsystem **130** includes a submit module **1336,** a conflicts checking module **1338,** a compare module **1340,** an add item module **1318,** reference count module **1320,** add direct reference module **1322,** remove direct reference module **1324**, read directory module **1326,** remove item module **1328,** edit file module **1330,** rename module **1332,** generate directory path module **1334,** locking module **1344,** generation ID module **1348.** These modules in the workflow subsystem and the versioning subsystem enable the creation and manipulation of areas, files, directories, and other objects used to develop a website.

The workflow and versioning subsystems are implemented in the C++ programming language. The operation of the modules in the workflow subsystem and the versioning subsystem are described below.

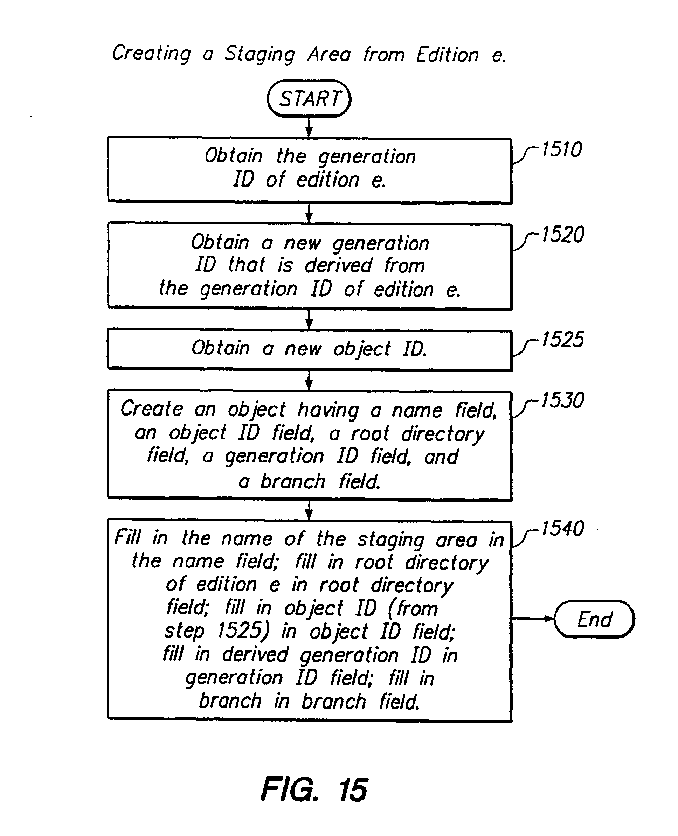

As discussed above, a work area is created by virtually copying the contents of a previous edition into the work area (with the exception of the first work area on the main branch which is initially empty). Figure **14** illustrates the operation of work area creation module **1312** for creating a work area from an edition, which will be arbitrarily named "edition e." The module **1312** obtains **1410** the root directory and the generation ID of edition e. The module **1312** then obtains **1420** from the generation ID module **1348** a new generation ID, which is derived from the generation ID of edition e. The generation ID module **1348** derives the new generation ID by performing the process illustrated in Figure **11**. The module **1312** also obtains a new object ID (which is a unique, randomly or sequentially generated number) for the work area.

The module **1312** creates **1430** an object representing the work area and having a name field, a root directory field, an object ID field, a generation ID field, and a branch field. The module fills **1440** in the name of the work area in the name field, the root directory of edition e in the directory field, the generation ID derived in step **1420** in the generation ID field, the object ID in the object ID field, and the identification of the branch along which the work area lies in the branch field. Thus, the object indicates that the work area is a data structure having the same root directory of edition e and having the derived generation ID. Note that the contents of edition e were not physically copied to create the work area. Rather, an object was created indicating that the newly created work area initially has the same data structure as edition e.

Figure **15** illustrates the operation of the staging area creation module **1314** for creating a staging area from an edition, which will be referred to as edition e. To create a staging area, the module **1314** obtains **1510** the generation ID of edition e and then obtains **1520** from the generation ID module **1348** a new generation ID derived from the generation ID of edition e. The module **1314** also obtains a new object ID (a unique, randomly or sequentially generated number) for the staging area.

The module **1314** creates **1530** an object that represents the staging area and that has a name field, a root directory field, a generation ID field, an object ID field, and a branch field. The module **1314** fills **1540** in the name of the staging area in the name field, the root directory of edition e in the root directory field, the generation ID obtained in step **1520** in the generation ID field, the object ID obtained in step **1525** in the object ID field, and the identification of the branch along which the staging area lies in the branch field.

It is sometimes desirable to have multiple staging areas. For instance, in addition to a public staging area it may be desirable to have a few private staging areas to which only select users can submit content. Multiple staging areas can be created by performing the above-described staging area creation method multiple times.

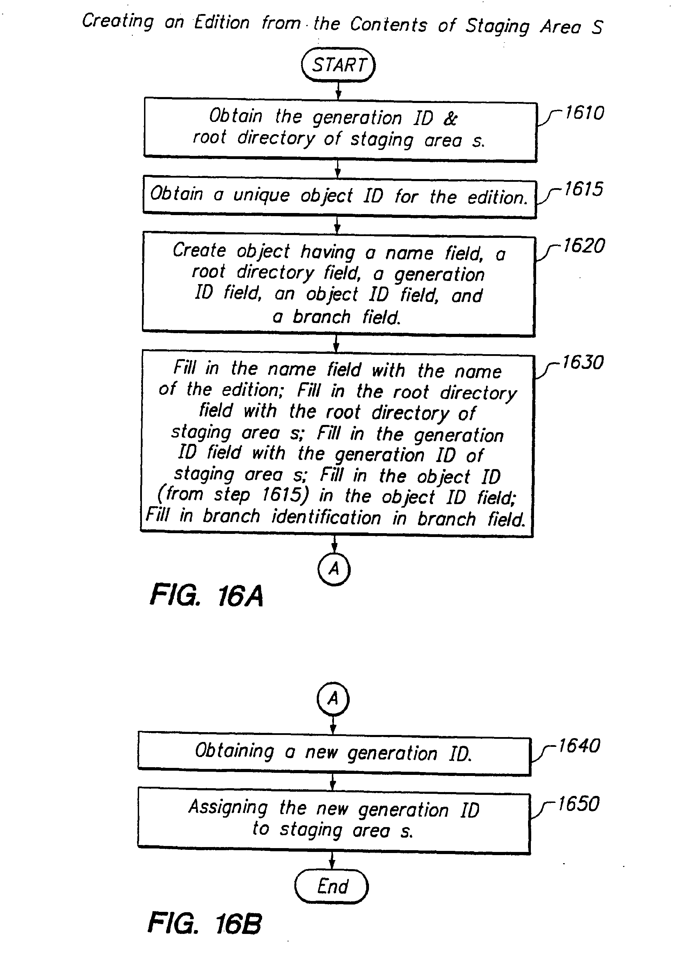

Figures **16a-b** illustrate the operation of the edition creation module **1316** for creating an edition from the contents of a staging area, arbitrarily labeled "s." The module **1316** obtains **1610** the generation ID and the root directory of staging area s. The module also obtains **1615** a unique object ID for edition e. The module **1316** creates **1620** an object that represents the new edition and that has a name field, a root directory field, a generation ID field, an object ID field, and a branch field. The module **1316** fills **1630** in the name field with the name of the new edition, the generation ID field with the generation ID of staging area s, the root directory field with the root directory of staging area s, the object ID field with the object ID obtained in step **1625**, and the branch field with the identification of the branch along which the edition lies.

By taking the generation ID of the staging area, module **1316** essentially converts staging area s into the new edition. Consequently, when the edition is created, the edition creation module **1316** obtains **1640** a new generation ID and assigns **1650** it to the staging area.

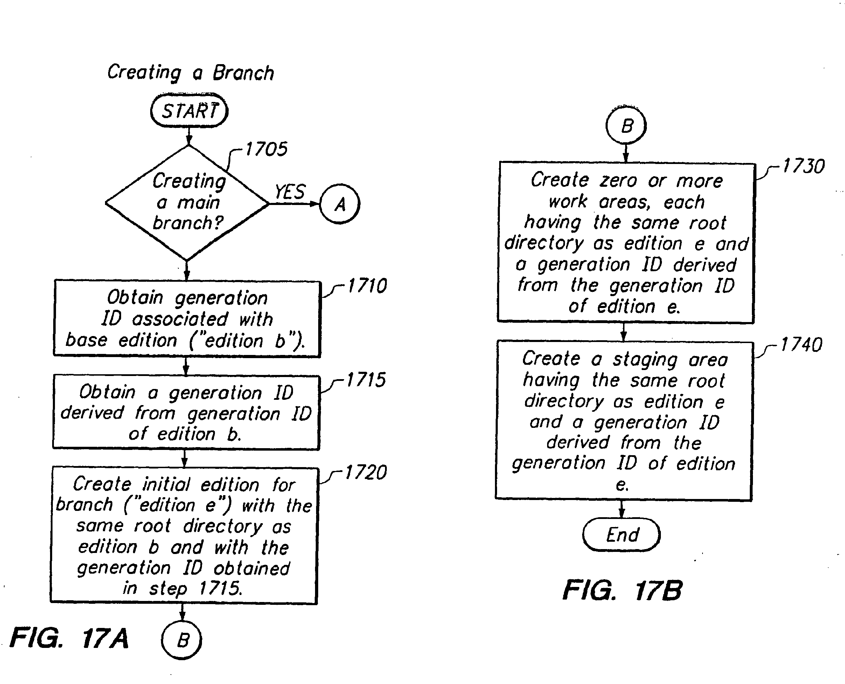

Figures **17a-17c** illustrate the operation of the branch creation module **1346.** To create a branch, the module **1346** determines **1705** whether the branch being created is a main branch. If the branch is not a main branch, the module **1346** obtains **1710** the generation ID of the base edition, call it "edition b," from the parent branch from which the new branch stems. Edition "b" can be any edition on the parent branch. The module **1346** then obtains **1715** from generation ID module **1348** a new generation ID derived from the generation ID of edition b. An initial edition, call it "edition e," is then created **1720** with the same root directory as edition b and with the generation ID obtained in step **1715**. Additionally, zero or more work areas may be created **1730**, each having the same root directory as edition e and a different generation ID derived from the generation ID of edition e. The work areas may be created at the time of branch creation or at a later time. A staging area is created **1740** having the same root directory as edition e and having a generation ID derived from the generation ID of edition e. Edition e, the work areas, and the staging areas are created in accordance with the methods discussed with respect to Figures **14-16**.

Referring back to step **1705,** if the branch being created is a main branch, the module **1346** obtains **1750** a root generation ID, call it g0. A root generation ID is a number generated using a conventional program for generating unique numbers, and it is not derived from another generation ID. The module **1346** then creates **1755**,**1760** an empty directory, call it d0, and a history object, call it h0, for the directory. The module **1346** adds **1765** an entry to the history object indicating that the history object is associated with directory d0 in generation g0. This entry can be represented by the notation (g0,d0).

After creating the history object, the module **1346** creates **1770** an initial edition having root directory d0 and root generation g0. The module also creates **1775** a staging area and one or more work areas, each having the same root directory as the initial edition (i.e., empty) and a different generation ID derived from the root generation. Note that the work areas do not have to be created at the time of branch creation; they may be created at a later time.

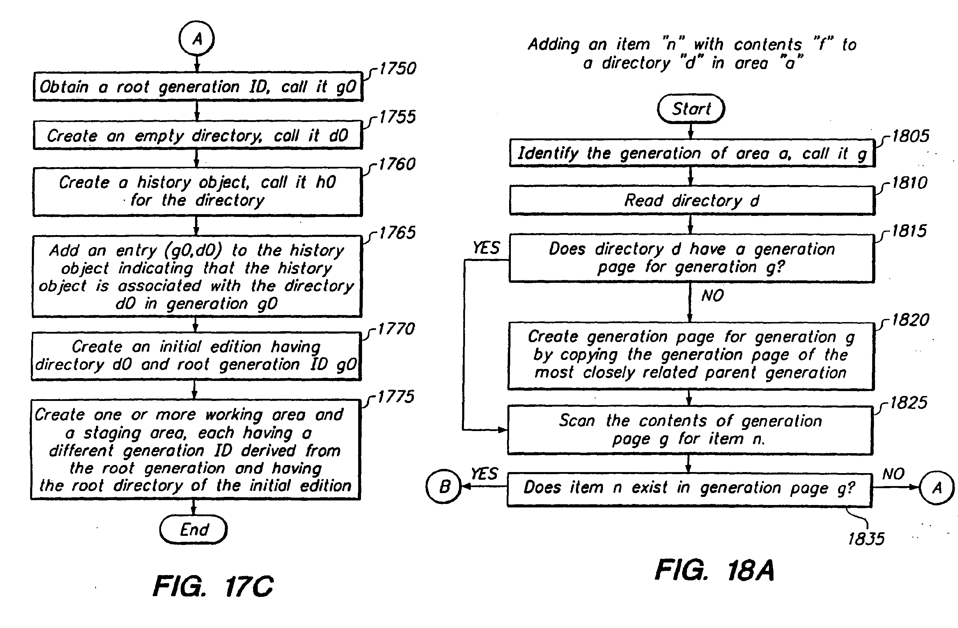

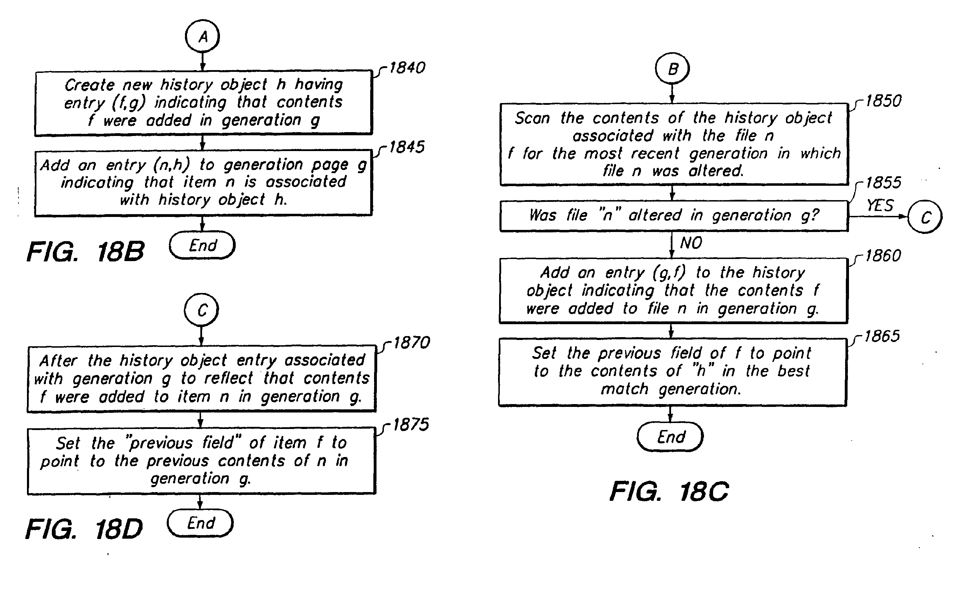

The add item module **1318** enables the addition of objects, such as files and directories, to a work area or a staging area. Figures **18a-d** illustrate the operation of the add item module **1318** for adding an item "n" having the contents "f" to a directory "d" in an area "a." Area a can be a work area or a staging area, and item n can be a file or a directory. Item f can also be a file or a directory. To add the item, the module **1318** identifies **1805** the generation ID for area a, call it "g." The module **1318** then reads **1810** directory d and determines **1815** whether there is a generation page for generation g. If there is not a generation page for directory d, the module **1318** creates **1820** a generation page for directory d by copying the generation page of the most closely related parent generation ("best match generation") that has a generation page. After either finding a generation page for generation g or creating it, the module **1318** scans **1825** the contents of the generation page for an item with the name "n," to determine **1835** whether item n exists in directory d in generation g. If an item named "n" is not found in directory d in generation g, the module **1318** creates **1840** a history object with an entry in the history object indicating that contents "f" are associated with item n in generation g. The notation (f,g) will be used to represent such an entry. The module **1318** subsequently adds **1845** an entry, represented by the notation (n,h), to the generation page "g," indicating that file "n" is associated with history object "h." Note that to add item n to directory d, item n is neither virtually copied nor physically copied into directory d. Directory d merely references item n.

The answer to the question in step **1835** will be affirmative when item n has already been added to the directory, but an updated version of item n is replacing the existing version (i.e. new contents are now being associated with item n). If this is the case, the module **1318** will scan **1850** the contents of the history object associated with file "n" for the most recent generation in which item "n" was altered. The module **1318** then determines **1855** if item n was altered in generation g (i.e., the module **1318** determines if item n was altered in area a because area a has generation ID g). If item n was not altered in generation g, then the module **1318** adds **1860** an entry to the history object indicating that content f was associated with file n in generation g. Item f has a field that indicates the previous contents of item n (e.g., item f includes a pointer to the previous contents of item n). The module **1318** sets **1865** the previous field of item f to point to the contents of "n" in the best match generation.

Referring to step **1855,** if item n was altered in generation g, then module **1318** alters **1870** the history item entry associated with generation g to reflect that, in generation g, the content of item n is item f. Then the module **1318** sets **1875** the previous field of item f to point to the previous contents of n in generation g.

To reclaim resources, an object (e.g. a directory, a file, a history object) is physically deleted from storage if it cannot be accessed from any area. Adding and deleting an object from an area can be virtual because often only one physical copy of the object is stored. Therefore, in order to determine whether the physical copy of an object should be deleted, it is necessary to know whether the object can be accessed from any one area. If an object can be accessed from an area, it is "referenced" in that area. To determine whether an object can be accessed from any one area, a reference count is maintained for each object, where the reference count indicates the number of areas from which an object can be accessed. An object can be deleted if the reference count for the object is zero.

To enable the calculation of a reference count, each object is associated with a "reference list" and an "anti-reference list." A reference lists indicates the directories to which an object was added and, for each referenced directory, the generation (i.e., area) in which the object was added to the directory. Specifically, each time an object is added to a directory, an entry is added to the reference list indicating the generation in which the object was added to the directory.

An anti-reference list indicates the directories from which the object was removed and, for each referenced directory, the generation in which the object was removed from the directory. Specifically, each time an object is removed from a directory, an entry is added to the anti-reference list indicating the directory and the generation in which the object was removed from the directory.

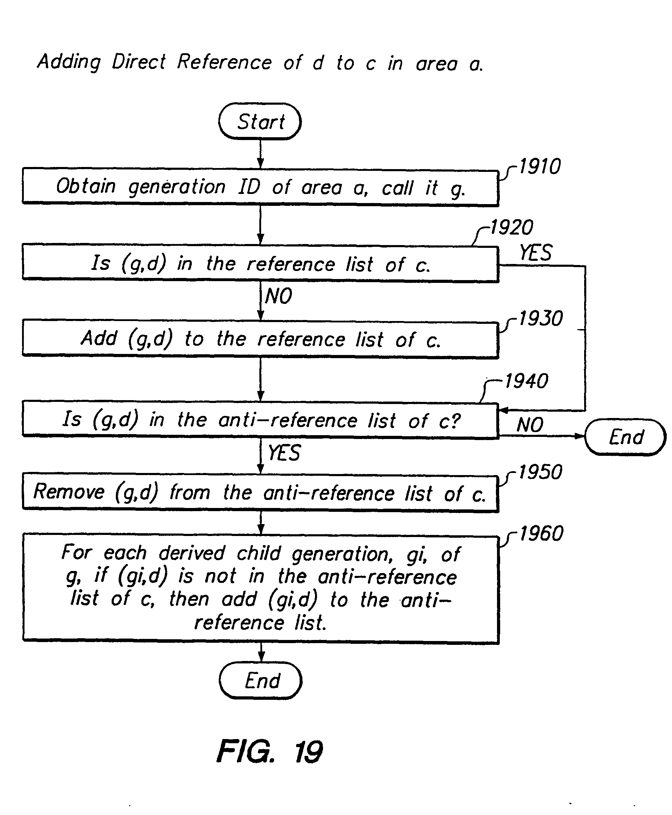

The add direct reference module **1322** adds entries to reference lists. Figure **19** illustrates the operation of the add direct reference module **1322** when an object (e.g., a file, or a directory, or a history object) is added to a directory "d" in area "a." When object c is added to directory d, a direct reference of d to c is added. In other words, the reference list of c indicated that c was added to directory d. To add a direct reference, the add direct reference module **1322** first obtains **1910** the generation of area a, which will be called "g" for convenience. The add direct reference module **1322** then determines **1920** whether there is an entry in the reference list of object c that indicates that object c was added to directory d in generation g. For convenience, such an entry is represented by the notation (g,d). If (g,d) is not in the reference list of object c, then the entry is added **1930** to the reference list.

After (g,d) is added to the reference list, or if (g,d) was already in the reference list, the add direct reference module **1322** determines **1940** whether the entry (g,d) is in the anti-reference list. The entry (g,d) would be in the anti-reference list if the object c was previously removed from directory p in generation g. If the entry (g, d) is not in the anti-reference list of object c, then the process of adding a direct reference is complete. If the entry (g,d) is in the anti-reference list, the entry is removed **1950** from the anti-reference list. Additionally, for each generation, call it $g_i$, directly derived from generation g, the entry $(g_i,d)$ is added **1960** to the antireference list. The reason for this last step is that a derived generation starts out with the same contents as its parent generation. Therefore, if an object can be accessed in one generation, it can be accessed from all child generations derived from that generation, unless the object was added to the parent directory after the derivation of the child generations or unless the object has been specifically removed from the child generations. Consequently, if an object is added to a directory in a generation having existing child generations, the anti-reference list must indicate that the object cannot be accessed from the existing child generations because the object was not part of the parent generation at the time the existing child generations were derived. Of course, the object can also be added to the child generations using the method illustrated in and described with respect to Figures **18a-d**.

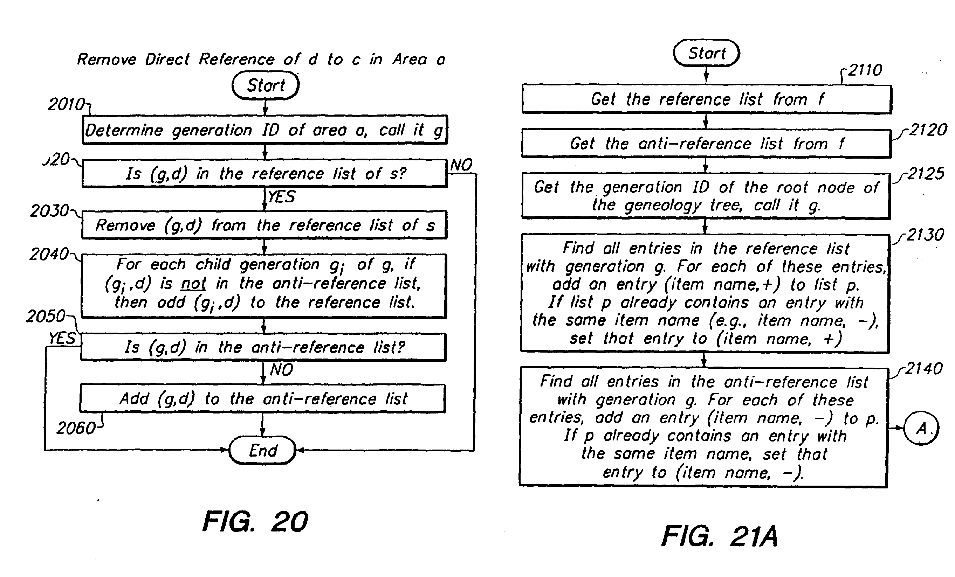

The remove direct reference module **1324** adds entries to the anti-reference list. Figure 20 illustrates the operation of the remove direct reference module **1324** when an object "c" is removed from a directory "d" in an area "a". The remove direct reference module **1324** ascertains **2010** the generation ID of area a, which will be called "g" for convenience. The remove direct reference module **1324** then determines **2020** whether there is an entry in the reference list of object that indicates that object c was previously added to directory d in generation g. Such an entry will be represented by the notation (g,d). If (g,d) is not in the reference list, then the process is complete because object c never had a direct reference to directory d in generation g. Therefore, no reference need be removed.

If (g,d) is in the reference list, it is removed **2030** from the reference list of object c. Additionally, for each child generation, call it $g_i$, derived from g, if the entry $(g_i, d)$ is not in the anti-reference list, the entry is added **2040** to the reference list. The reason for this step is so that the reference list indicates that, if object c was accessible from existing child generations, it is still accessible from existing child generations, despite the fact it has been removed from a parent generation.

After step **2040,** the remove direct reference module **1324** determines **2050** whether the entry (g,d) is in the anti-reference list. If the entry is not already in the anti-reference list, it is added **2060** to the anti-reference list. Otherwise, the process of removing a direct reference is complete. Although the entry (g,d) should not already be in the anti-reference list, the remove direct reference module **1324** makes this determination in case the entry was erroneously added to the anti-reference list at an earlier time.

The reference count module **1320** calculates the number of references to an item. To do so, the reference count module **1320** maintains list p of two tuples, which is initially empty. The reference count module **1320** also uses an integer n, which is initially set to zero, to represent the number of references made to item f.

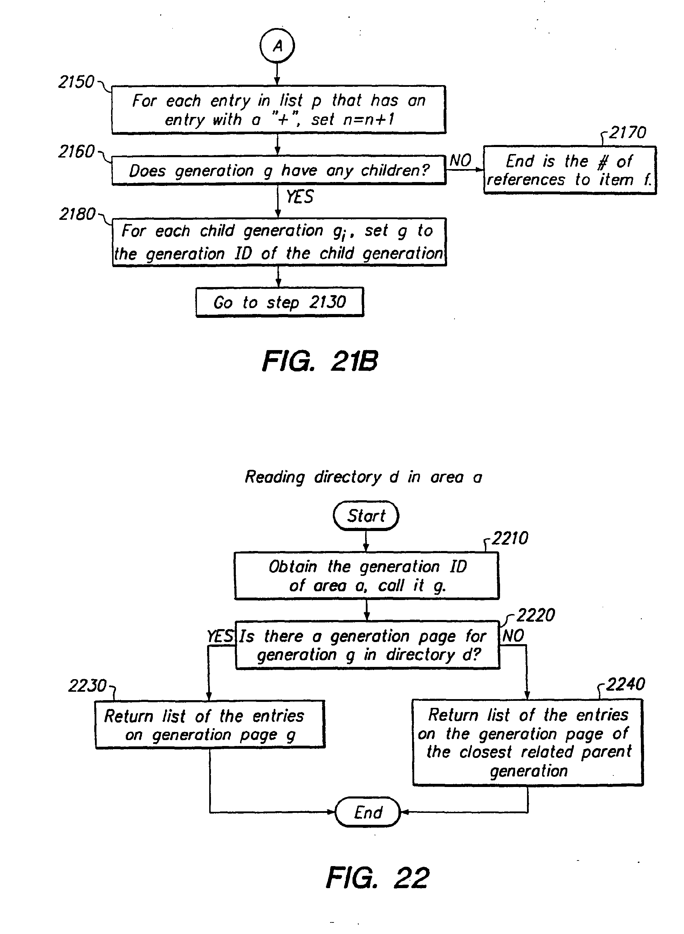

Figures **21a-b** illustrate the operation of the reference count module **1320** for calculating the reference count of an item f. The reference count module **1320** retrieves **2110, 2120** the reference and anti-reference lists for item f. The reference count module obtains **2525** the generation ID, which will be called "g" for convenience, of the root node of the genealogy tree (recall that all the areas in the present invention can by organized into a genealogy). The reference count module **1320** finds **2130** all entries in the reference list with generation g. For instance, if item f was added to directory d1 in generation g, there would be entry (g, d1) in the reference list, and the reference count module **1320** would locate this entry. For each of the entries with generation g, the reference count module **1320** adds **2130** an entry (item name, +) to list p, where "item name" is the name of the item referenced in generation g. The "+" means the item was referenced in the reference list (as opposed to the anti-reference list). For instance, if the entry (g,d1) was found in the reference list of item f, the entry (d1, +) would be added to list p. If list p already includes an entry with the same item name (*e.g.*, d1, -), the reference count module ensures that the entry is set to (item name, +).

The reference count module **1320** also searches the anti-reference list to find **2140** all entries in the anti-reference list with generation g. For each of the entries in the anti-reference list with generation g, the reference count module **1320** adds **2140** an entry (item name, -) to list p, where the "-" means that the item was referenced in the anti-reference list. If list p already includes an entry with the same item name, the reference count module ensures that the entry is set to (item name, -).

The reference count module **1320** then sets **2050** n=n+1 for each entry in list p with a "+." Recall that n is initially set to zero. The reference count module **1320** then determines **2160** whether generation g has any child generations (i.e., generations derived from generation g). If not, the reference count is complete **2170,** and n is the number of references to item f. If generation g has child generations, for each child generation the reference count module **1320** sets **2180** g equal to the generation ID of the child generation and returns to step **2130.**

Figure **22** illustrates the operation of the read directory module **1326** for reading the contents of a directory "d" in an area "a." The read directory module **1326** obtains **2210** the generation of area a, which will be referred to as "g." The read directory module **1326** parses through the directory to determine **2220** whether there is a generation page for generation g. There will be a generation page for generation g if directory d has already been modified in area a. If there is a generation page for generation g, the read directory module **1326** returns **2230** a list of the entries on the generation page "g." Otherwise, the directory returns **2240** a list the entries on the generation page of the closest related parent generation page ("best match generation Page").

An example of the operation of the read directory module will be described using the directory illustrated in Figure **12.** To read the contents of the directory in an area having generation G3, the read directory module **1326** returns a list of the entry (ies) on generation page G3, which is the entry (m, h0) in this example.

Assume the generations in Figure **12** are related in the manner as illustrated in Figure **10.** To read the contents of directory d in generation G4, the read directory module **1326** determines whether there is a generation page for G4. Since there is not a generation page for G4, the read directory module **1326** searches for the best match generation page. G1 is the closest parent generation to G4, but there is no generation page for G1. G0 is the next closest parent generation, and since there is a generation page for G0, a list of the entries in the G0 generation page is returned as the contents of the directory in G4.

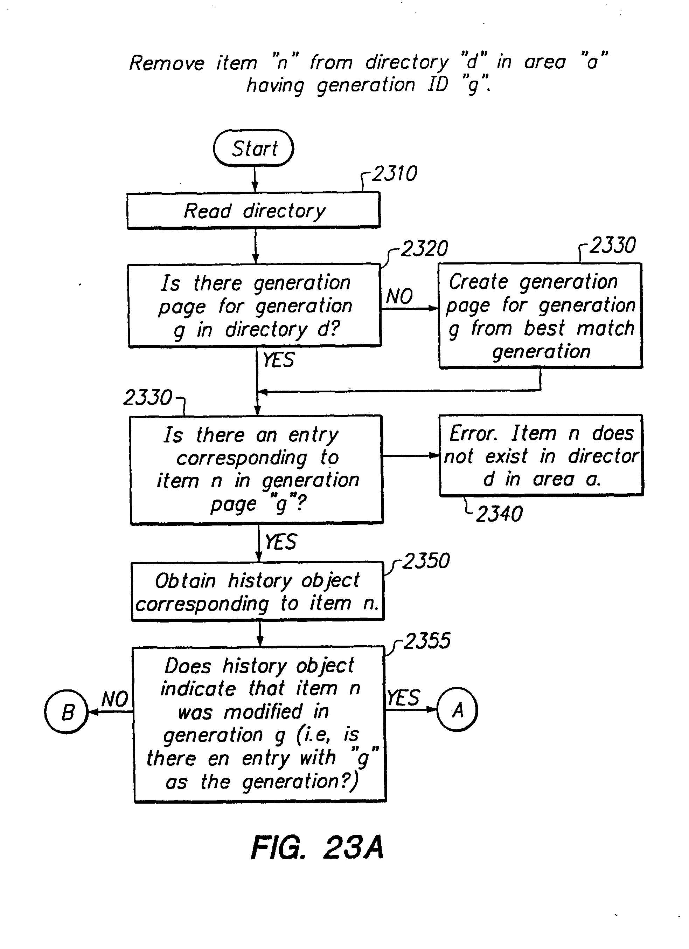

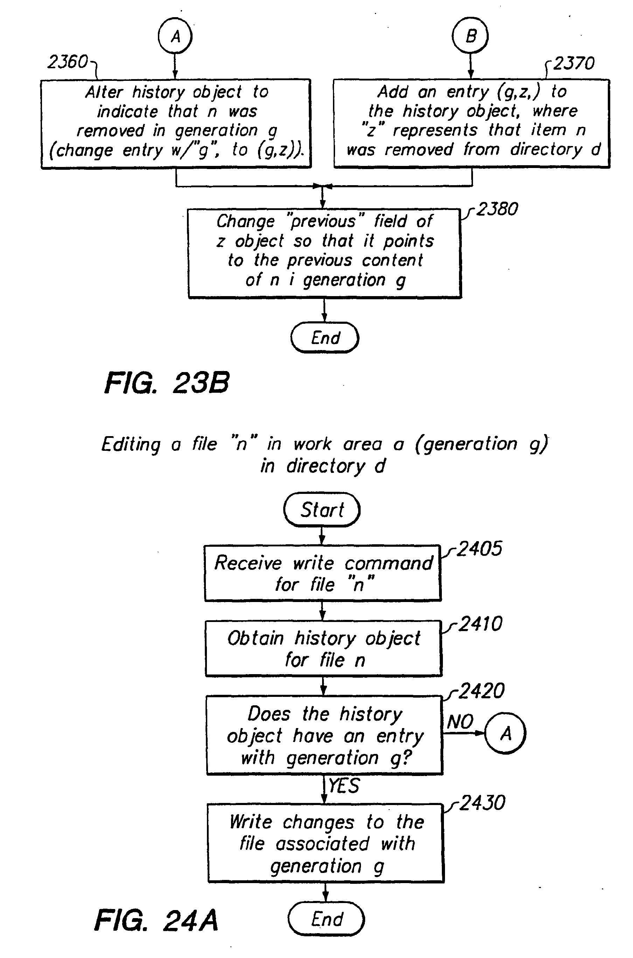

Figures **23a-b** illustrate the operation of the remove item module **1328** when an item "n" is removed from a directory "d" in area "a" having a generation ID "g." Item n can be any object in a directory, such as a file or another directory. To remove an item from a directory d, directory d is **2310** read in accordance with the method described with respect to Figure **22**. The remove item module **1328** determines **2320** whether there is a generation page for generation g in directory d. If not, a generation page is created **2330** for generation g by copying the generation page from the closest parent generation ("best match generation").

The remove item module **1328** determines **2330** if there is an entry for item n in the generation page "g." If not, the remove item module **1328** indicates **2330** that an error has occurred because item n is not in directory d in generation g and, therefore, cannot be removed from the directory in generation g.

Returning to step **2330,** if there is an entry for item n in generation page g, the remove item module **1328** obtains **2350** the history object corresponding to n. The remove item module **1328** determines **2355** whether the history object indicates that item n was modified in generation g. In other words, the remove item module **1328** determines whether the history object includes an entry with "g" as the generation.

If item n was not altered in generation g, the remove item module **1328** adds **2370** an entry to the history object indicating that item n was removed from directory d in generation g. Since the deletion of item n is virtual in this process, adding this entry effectively deletes item n from directory d in generation g. This entry is represented by the notation (g,z), where "z" represents an object that indicates that an item has been removed. If a z object has not been created for item n, the remove item module **1328** creates a z object.

Referring to step **2355,** if item n has been altered in generation g, the remove item module **1328** alters **2360** the entry in the history object corresponding to generation g to indicate that n was removed from directory d in generation g (i.e., the entry becomes (g,z)). The remove item module **1328** creates a z object for item n if one does not already exist.

Like the file contents **1235** illustrated in Figure **12**, a z object also has a field that indicates the previous contents of an item. This field is referred to as the "previous field". After steps **2360** or **2370,** the previous field in the z object is set **2380** to point to the previous contents of n in generation g.

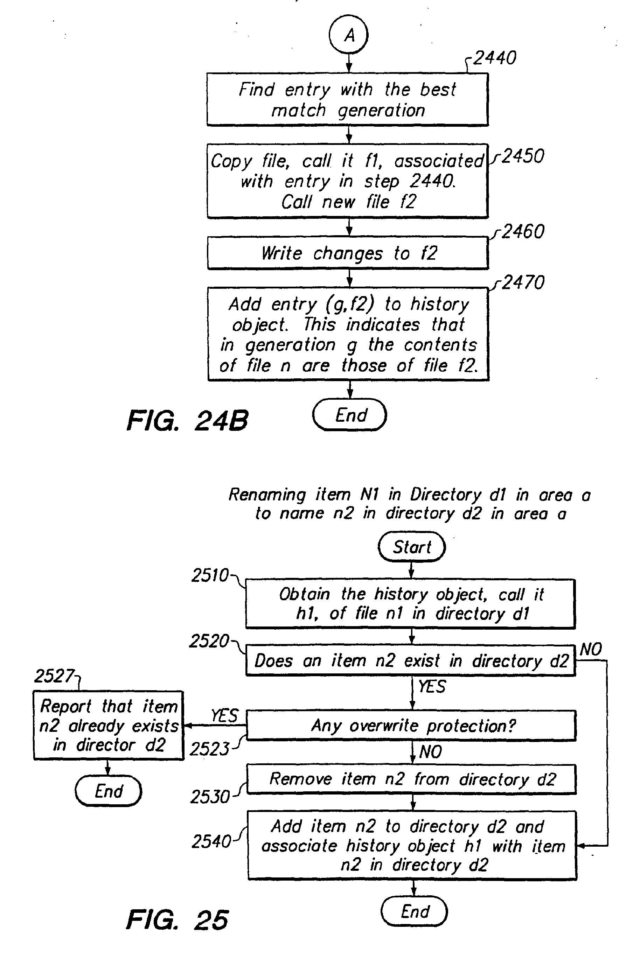

Figures **24a-b** illustrate the operation of the edit file module **1320** for editing a file "n" in a directory "d" in a work area "a" having a generation ID "g." The edit file module **1320** receives **2405** a write command for file "n." The edit file module **1320** then obtains **2410** the history object for file n, and determines **2420** whether the file n has been altered in generation g (*i.e.*, is there an entry with generation g?). If so, the edit file module **1320** writes **2430** all changes to file "n" to the contents associated with file n in generation g.

If the history object does not have an entry with generation g, the edit file module **1320** finds **2440** an entry with the best match generation. The edit file module **1320** then copies **2450** the file, call it f1, associated with the entry in step **2440,** and it writes **2460** all changes to the new copy of file f1, which is referred to as f2. An entry is added **2470** to the history object indication that, in generation g, the contents of file n are those of file f2. In other words, the edit file module **1320** adds the entry represented by the notation (g, f2) to the history object

Figure **25** illustrates the operation of the rename module **1332** for renaming an item n1, which may be a file or a directory, in directory d1 in area a to item n2 in directory d2 in area a. The rename module **1332** obtains **2510** the history object, which will be called h1, of item n1 in directory d1. Note that if no such history object exists, the rename module **1332** reports to the user that an error has occurred. After obtaining the history object, the rename module **1332** determines **2520** whether an item with the name n2 exists in directory d2. If so, the rename module determines **2523** whether there is any overwrite protection for item n2. In one embodiment, there is overwrite protection for directories, but not for files. If overwrite protection exists, the rename module reports **2527** that an item n2 already exists in directory d2. If there is no overwrite protection, the rename module **1332** removes **2830** the existing item n2 from directory d2 in accordance with the method illustrated in and described with respect to Figures **23a-b**.

Once the existing item n2 has been removed from directory d2 or if item n2 did not exist in directory d2, the rename module **1332** adds **2540** a new item with the name n2 to directory d2. The rename module **1332** associates history object h1 with item n2 in directory d2. In the "previous field" of the contents of item n2, the rename module **1332** indicates that n1 is the "rename from ancestor" (as defined below) of n2. Note that the rename process is the same if d1 = d2.

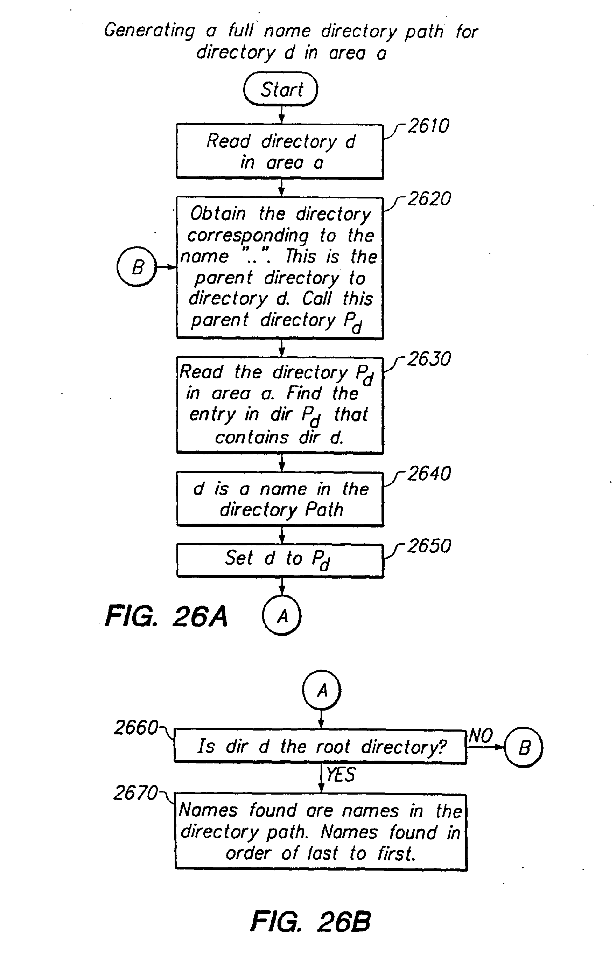

Figures **26a-b** illustrate the operation of the generate directory path module **1334** for generating a full name path for directory d in area a. The generate directory path module **1334** reads directory d in area a and identifies the parent directory, call it $P_d$, to directory d. According to one embodiment of the present invention, a parent directory is associated with the entry ".." in a directory. In this embodiment, the generate directory path module **1334** identifies the directory corresponding to the entry "..".

The module **1334** reads directory $P_d$ in area a, and finds the entry for directory d. The module **1334** then identifies directory d as a name in the directory path.

This algorithm is repeated until the root directory is reached. Specifically, the method described above with respect to directory d is repeated for directory Pd and then the parent of directory Pd, and so on until the root directory is reached. The names that are found are the names in the directory path. The names are found in order of last to first in the directory path name.

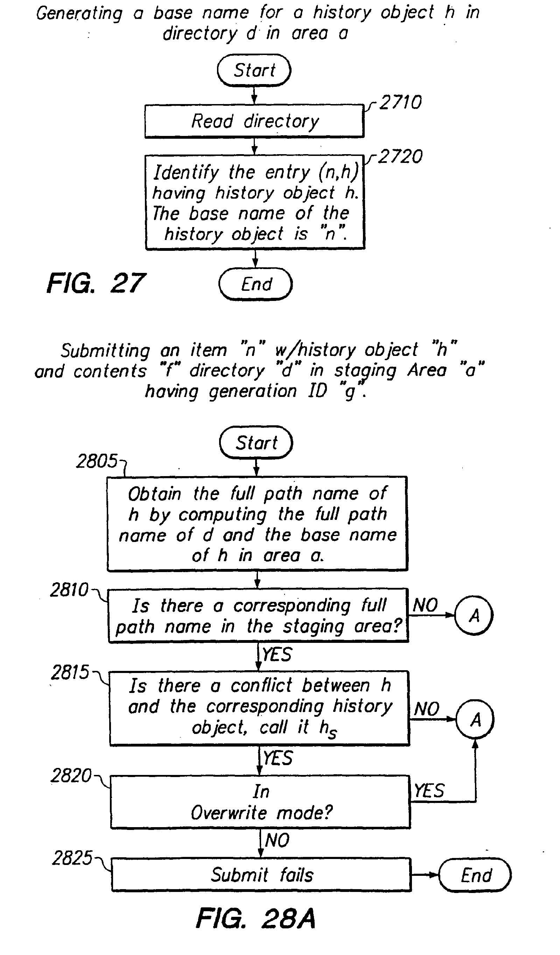

Figure **27** illustrates the operation of the generate base name module **1335** for generating the base name of a history object "h" in directory "d" in area "a." The generate base name module **1335** reads **2710** the generation page corresponding to area a in directory d. The generate base name module **1335** identifies **2720** the entry with history object h. The name of the item corresponding to history object h in the entry is the base name sought. For instance, if the entry (n,h) was found in directory d in area a, "n" would be the base name of history object h.

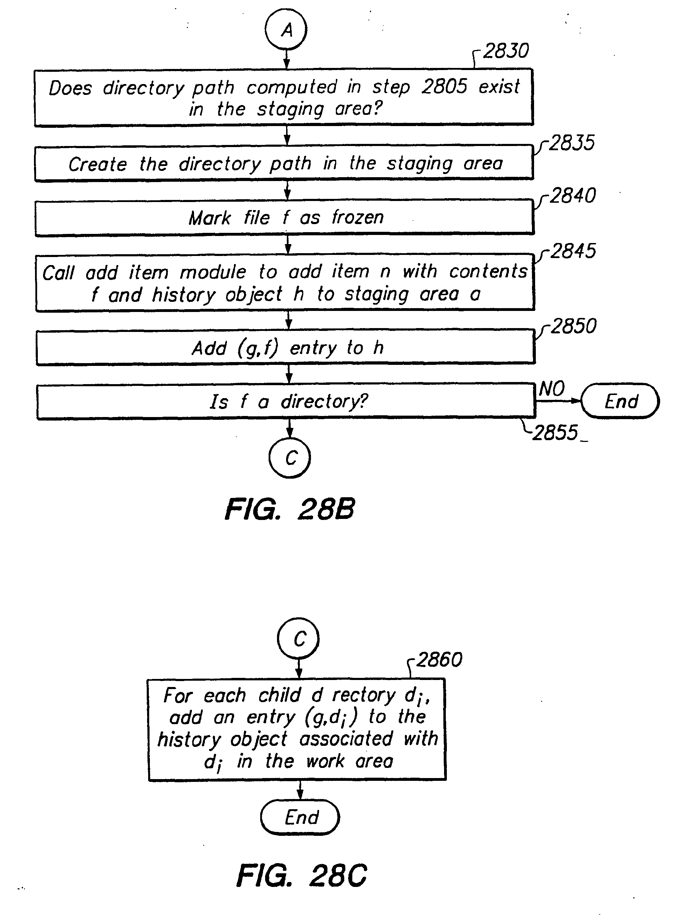

Figures **28a-c** illustrate the operation of the submit module **1336** for submitting an item "n" with history object h and contents f to a directory d in staging area a having generation ID g. The submit operation is used to submit the contents of a work area to a staging area. Since the contents of a file are defined by its history object, the history object of a file is what is actually submitted to the staging area. The submit module **1336** obtains **2805** the full path of the history object h by computing the full path name of directory d and the base name history object h in area a, in accordance with the methods illustrated in and described with respect to Figures 26 and 27. The submit module **1336** determines **2810** if there a corresponding item with the same full path name in the staging area. This is done by repeatedly reading directory d (with read directory module **1326)** to determine whether another object in the staging area has the same full path name as history object h.

If there is not a corresponding item in the staging area, the submit module **1336** ascertains **2830** whether the directory path computed in step **2805** exists in the staging area. If it does not, the directory path is created **2835,** and file f is marked **2840** frozen. After step **2830** or step **2840,** the submit module **1336** calls the add item module **1318** to add **2845** item n with contents f to directory d in staging area a. The submit module **1336** adds **2840** entry (g,f) to history object.

The submit module **1336** then determines **2855** if item f is a directory. If not, the submit process is complete. If item f is a directory, then for each child-directory $d_i$, the submit module **1336,** adds an entry (g,$d_i$)

to the history object associated with $d_i$ in the work area. This step ensures that, when a directly is submitted to a staging area, its child directories are also submitted.

Returning to step **2810,** if there is a corresponding item in the staging area, the submit module **1336** calls the conflict checking module **1338** (described below) to determine **2815** whether there is a conflict between the corresponding history object, call it $h_s$, and history object h. History objects h and $h_s$ are not in conflict if a) h and $h_s$ are the same or b) h derives from $h_s$ or c) $h_s$ derives from h. If there is not a conflict between h and the corresponding history object $h_s$, the submit module **1336** proceeds to step **2840.** Otherwise the submit module **1336** determines **2820** whether the overwrite mode, which allows an existing file to be overwritten, is in effect. Is so, the submit module **1336** proceeds to step **2840.** If not, the submit fails because of the conflict.

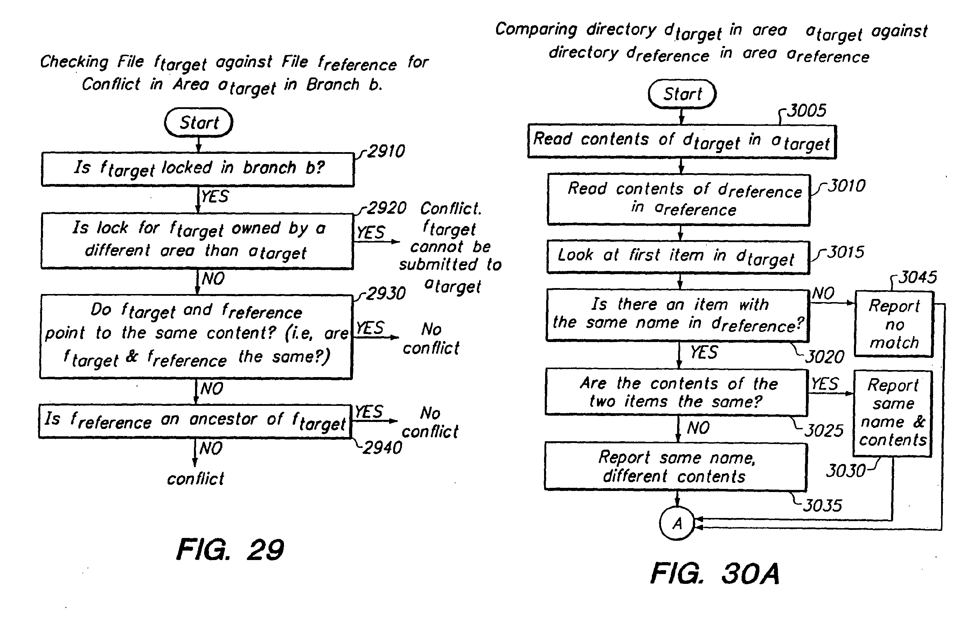

Figure **29** illustrates the operation of the conflict checking module **1338** for checking a file $f_{target}$ against a file $f_{reference}$ for conflict in area $a_{target}$ in branch b. The conflict checking module **1338** determines **2910** whether $f_{target}$ is locked in branch b. A file is locked in a branch if only one work area on the branch can submit the file to the staging area. Locking a file provides a means to avoid conflicts. If $f_{target}$ is locked in branch b, the conflict checking module **1338** determines **2920** whether the lock for $f_{target}$ is owned by a different area than $a_{target}$. If so, there is a conflict and $f_{target}$ cannot be submitted to area $a_{target}$.

If $f_{target}$ is not locked in branch b or if the lock for $f_{target}$ is owned by $a_{target}$, the conflict checking module ascertains **2930** whether $f_{target}$ and $f_{reference}$ point to the same content (i.e., are $f_{target}$ and $f_{reference}$ the same?). If they point to the same content, the conflict checking module **1338** finds that there is no conflict. If the two files do not have the same content, the conflict checking module **1338** determines **2940** whether $f_{reference}$ is an ancestor (i.e., a same-name-ancestor, a copy-from-ancestor, or a rename-from-ancestor as defined below) of $f_{target}$. If $f_{reference}$ is an ancestor, there is no conflict because $f_{target}$ is likely a desired modification of $f_{reference}$. Otherwise, there is a conflict

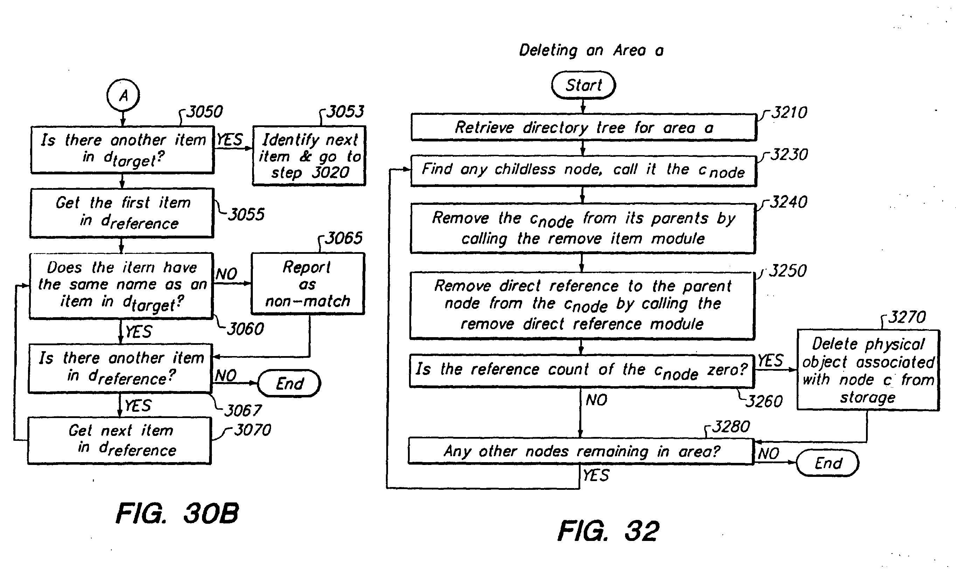

Figures **30a-b** illustrates the operation of the compare directory module **1340** for comparing a directory $d_{target}$ in area $a_{target}$ against directory $d_{reference}$ in area $a_{reference}$. To do the comparison, the compare directory module **1340** reads **3005** the contents of directory $d_{target}$ in area $a_{target}$ in accordance with the method illustrated in and described with respect to Figure **22.** The conflict checking module also reads **3010** the contents of directory $d_{reference}$ in area $a_{reference}$ in accordance with the method illustrated in and described with respect to Figure **22.**

The compare directory module **1340** identifies **3015** the first item in directory $d_{target}$, and determines **3020** whether there is an item in directory $d_{reference}$ with the same name as the first item in directory $d_{target}$. If not, the compare directory module **1340** reports **3045** that there is no item in $d_{reference}$ that matches the identified item in $d_{target}$ and proceeds to step **3050.** Otherwise, the compare directory module **1340** determines **3025** whether the two items with the same name have the same contents. Such a comparison is done by looking at the history object of each item, and if the history object of $d_{reference}$ in area $a_{reference}$ points to the same contents as the history object of $d_{target}$ in area $a_{target}$, the contents of the directories are the same. If the contents are the same, the compare directory module **1340** reports **3030** that the items have the same name and contents, and the compare directory module **1340** proceeds to step **3050.** If the contents are not the same, the compare directory module **1340** reports **3035** that the names are the same, but not the contents, and the compare directory module **1340** proceeds to step **3050.**

In step **3050,** the compare directory module **1340** ascertains **3050** whether there is another item in $d_{target}$. If there is another item in $d_{target}$, the compare directory module **1340** identifies **3053** the next item and returns to step **3020.** If there is not another item in $d_{target}$, the compare directory module **1340** identifies **3055** the first item in $d_{reference}$. The compare directory module **1340** determines **3060** whether the identified item has the same name as an item in $d_{target}$. If not, the compare directory module **1340** reports **3065** that the identified item in $d_{target}$ does not match any item in $d_{reference}$ and proceeds to step **3067.** If the identified item has the same name as an item in $d_{target}$, the identified item was already found in step **3020,** and, thus, the compare directory module **1340** proceeds to step **3067.**

In step **3067,** the compare directory module **1340** determines whether there is another item in directory $d_{reference}$. In response to there being no more items in $d_{reference}$, the process for comparing $d_{target}$ to $d_{reference}$ is complete. Otherwise, the compare directory module **1340** obtains **3070** the next item in $d_{reference}$ and returns to step **3060.**

The compare file module **1341** compares files (as opposed to the compare directory module **1340** which compares directories). Files are compared when they are submitted to a staging area. Additionally, website developers may wish to compare files in their respective work areas.

Comparing files includes looking at the ancestors of a file. Three types of ancestors a file may have are a same-name-ancestor, a copy-from-ancestor, and a rename-from-ancestor.

A same-name-ancestor is a previous version of a file, call it f, having the same name as file f (*i.e.*, "f"), where the same-name-ancestor was previously submitted to the same area as file f. The "previous field" (e.g., field **1240** in Figure **12**) of a file points to the same-name-ancestor of the file.

A copy from ancestor of a file, call it f, is a file whose contents were copied into file f. A copy to or revert operation on a file may produce a file in a work area with a copy-from-ancestor. This occurs if the operation overwrites an existing file. For instance, let file e2 be a file in a staging area. Let file u be a file in a work area that is in conflict with file e2. If file u is updated by replacing the contents of file u with a copy of the contents of file e2, the old file u is the same-name-ancestor of the updated file u, and file e2 is the copy-from-ancestor of the updated file u. File e2 can be a file from another area or another branch. File e2 can also be a file in the version history of file u or a file in a version history of another file on another branch. If a file has a copy-from-ancestor, the "previous field" (e.g., field **1240** in Figure **12**) of that file points to the copy-from-ancestor, as well as to the same-name-ancestor.

A rename-from-ancestor of a file, call it f, is the is the file from which file f is renamed. If a file has a rename-from-ancestor, the "previous field" of the file points to the rename-from-ancestor, as well as the same-name-ancestor.

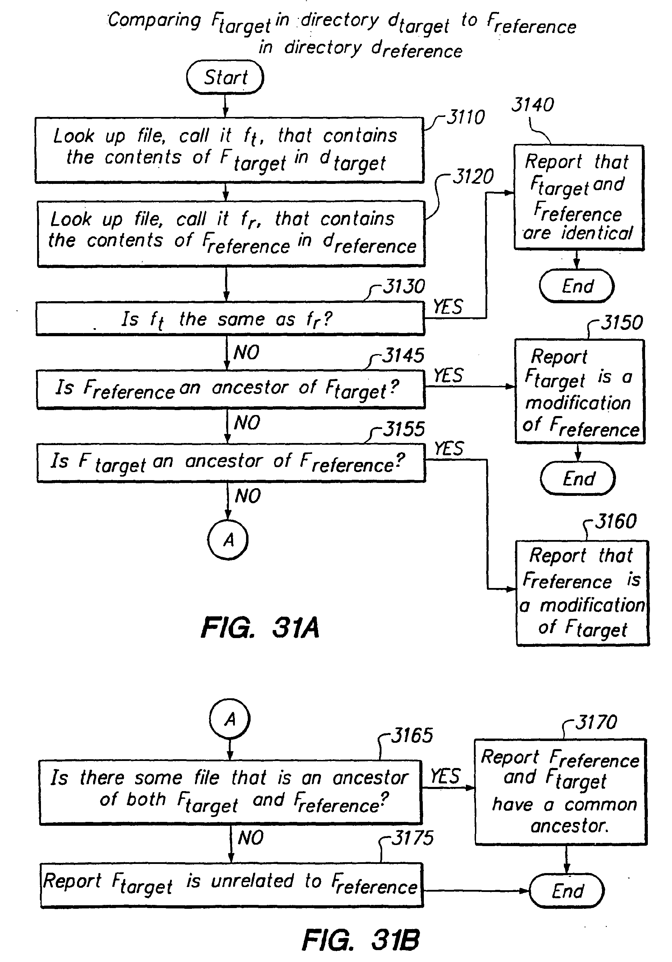

Figures **31a-b** illustrate the operation of the compare file module **1341** for comparing a file $F_{target}$ in directory $d_{target}$ to a file $F_{reference}$ in directory $d_{reference}$. The compare file module **1341** looks up **3110** the file, call $f_t$, that contains the contents of $F_{target}$ in directory $d_{target}$. Note the difference between $F_{target}$ and $f_t$ is that $F_{target}$ is the name of the file in the directory, whereas, ft is the actual contents of $F_{target}$ in directory $d_{target}$. The difference between $F_{target}$ and $f_t$ is like the difference between the file named "m" in the directory illustrated in Figure 12 and the contents, "A", of file "m" in generation G0.

The compare file module **1341** looks **3120** up the file, call it $f_r$, that the contains the contents of $F_{reference}$ in $d_{reference}$. The compare module then determines **3130** whether $f_r$ and $f_t$ are identical. If so, then the compare file module **1341** reports **3140** that $F_{reference}$ and $F_{target}$ are identical.

If $f_r$ and $f_t$ are not identical, the compare file module **1341** determines **3145** whether $F_{reference}$ is an ancestor of $F_{target}$. Recall that the contents of each file contain a pointer (in the "previous field") to the same-name-ancestor of the file (e.g., the previous contents) and, if the file has a copy-from-ancestor or a rename-from-ancestor, to such ancestor. The compare module traverses back through the "previous field" of $f_t$ and its ancestors in search of $f_r$. If $f_r$ appears in one of the "previous fields" traversed, then $F_{reference}$ is an ancestor of $F_{target}$, and the compare file module **1341** reports **3050** that $F_{target}$ is a modification of $F_{reference}$.

If $F_{reference}$ is not an ancestor of $F_{target}$, the compare file module **1341** determines **3155** whether $F_{target}$ is an ancestor of $F_{reference}$. Specifically, the compare module traverses back through the "previous field" of $f_r$ and its ancestor in search of $f_t$. If $f_t$ appears in one of the "previous fields" traversed, the compare file module **1341** reports **3160** that $F_{reference}$ is a modification of $F_{target}$. Otherwise, the compare file module **1341** determines **3165** whether there is some file that is an ancestor of both $F_{target}$ and $F_{reference}$. If there is some common file, the compare file module **1341** reports **3170** $F_{reference}$ and $F_{target}$ have a common ancestor, and, if there is not a common file, it reports **3175** that $F_{target}$ is unrelated to $F_{reference}$.

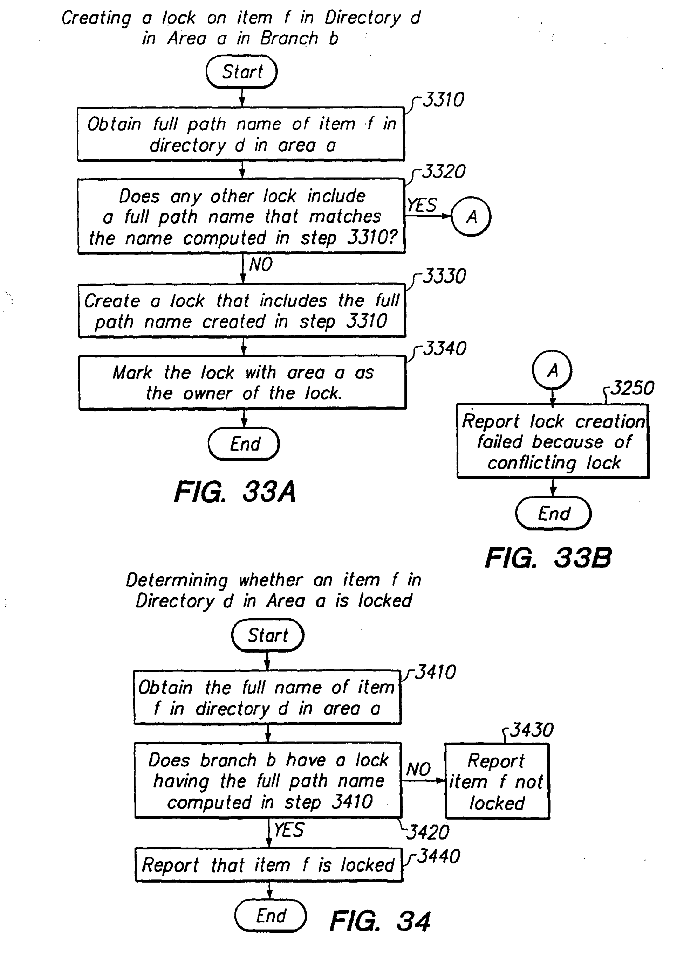

The area deletion module **1342** deletes areas that are no longer desired by a user or system administrator. Figure **32** illustrates the operation of the area deletion module **1342** for deleting an area "a." The area deletion module retrieves **3210** the directory tree for area a, and finds **3230** any childless node (i.e., directory), which will be called the "c node" for convenience. The area deletion module **1342** calls the remove item module **1328** to remove **3240** the c node from its parent directory(ies). The area deletion module **1342** also calls the remove direct reference module **1324** to remove **3240** the reference to the parent directory from the reference list of the c node. The area deletion module **1342** then calls the reference count module **1320** to determine **3260** whether the reference count is zero, and, if it is zero, the physical object associated with the c node is deleted **3270** from storage. Otherwise, the physical object associated with the c node is not deleted from storage because, although the c node has been removed from area a, it still exists in other areas. After determining the reference count, the delete area module **1342** determines **380** whether there are any nodes left in the area. If so, the module **1342** returns to step **3230.** If not, the area deletion process is complete.

Figures **33a-b** and **34** illustrate the operation of the lock module **1346.** Figures **33a-b** illustrate the operation of the lock module **1346** for creating a lock on item f in directory d in area a along branch b. To create such a lock, the lock module **1346** determines **3310** the full path name of item f in directory d in area a and then ascertains **3320** whether any other lock has the same full path name. If so, the lock module **1346** reports **3250** that the lock creation operation failed because of a conflicting lock. If no other lock has the same full path name, the lock module **1346** creates **3230** a lock that includes the full path name identified in step **3310** and marks **3240** the lock with area a as the owner of the lock.

Figure **34** illustrates the operation of the lock module **1346** for determining whether an item in directory d in area a is locked. The lock module **1346** ascertains **3410** the full path name of item f in directory d in area a and then determines **3420** whether branch b has a lock with the same full path name. If not, the lock module reports **3430** that item f is not locked. Otherwise, the lock module reports **3440** that item f is locked.

Now that the website development software has been described, the HTTP protocol virtualization module **137** ("the virtualization module **137**"), according to one embodiment, will be described.

Each area appears to be a complete website at the HTTP protocol level. To accomplish this without having a separate web server for each area, virtualization module **137** enables a single web server to appear as multiple web servers. This greatly reduces deployment and maintenance costs while allowing each area to be a complete website at the HTTP protocol level.

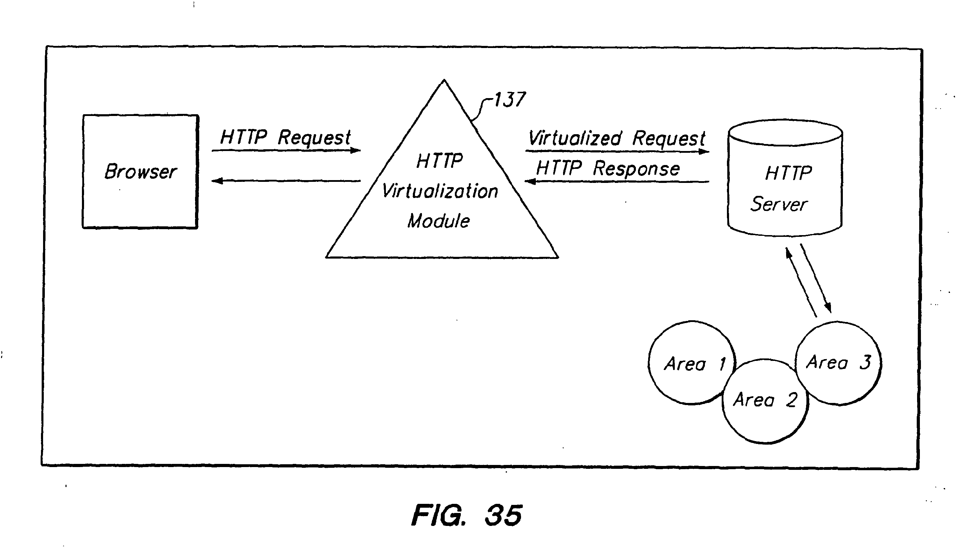

Figure **35** illustrates the communication path between a web browser on one of the development workstations **110,** the virtualization module **137,** and the web server **145.** The web browsers on the development workstations **110** are directed to route all or select (depending on the type of links as discussed below) HTTP requests for website content to the virtualization module **137.** If needed, the virtualization module **137** alters the directory path of the request so that the directory path corresponds to the area from which the request originated (this area is referred to as the "viewing area") or another desired location (as discussed below). In other words, HTTP requests sent to virtualization module **137** are redirected, if needed, to the file system corresponding to the viewing area or another desired location.

After processing an HTTP request, the virtualization module **137** forwards the HTTP request to the web server **145,** which retrieves the requested document from the location specified by the request. The web server **145** then sends the requested document (or an error signal if it is not found) back to the virtualization module **137,** which forwards the requested document (or error signal) back to the web browser.

The virtualization module **137** uses mapping rules to determine whether and how to alter an HTTP request. A mapping rule maps one expression to another expression. A mapping rule is broken down into two sides separated by an equal sign. The left hand side of a mapping rule is a regular expression, which defines the parts of a variable pattern to be matched. The regular expressions of the mapping rules follow well defined rules of regular expressions in the fields of mathematics and computer science, and, in one embodiment, the regular expressions used in the mapping rules are applied the same way that regular expressions are applied in the UNIX operating system (*e.g.*, regex(5) extended regular expressions).

The right hand side of the mapping rule is the substitute expression (*i.e.*, the expression substituted for the regular expression on the left hand side). In the substitute expression, the symbol $N, where N is "1", "2",.."9", represents the first ten parts of a pattern on the left hand side that are represented by the regular expression parentheses operator () (e.g., $1 represents the first pattern on the left side, $2 represents the second pattern on the left side, and so on).

A HTTP request can be divided up into three parts in the following order

    *area prefix/document root prefix/name of requested file*

The module **137** redirects HTTP requests by altering the document root prefix and the area prefix of the request The document root prefix is the path name of the "document root," where the document root is the source directory for the web server. The document root is the directory in the file system under which the web server searches for requested documents (unless otherwise specified). The document root can be thought of as the webserver's notion of its root directory.

The top level directory of an area is not necessarily the document root. A developer may set up an area such that the top level directory of an area does not correspond to the document root of the web server. The actual document root for the web server may live any number of directories beneath the top area directory.

The document root for an area is specified by a special mapping rule. In one embodiment, each branch has a set of mapping rules, and, in this embodiment, each area along a particular branch has the same document root as specified by the special '_ docroot' mapping rule.

An example of a mapping rule for the document root of a particular branch is as follows:

_docroot=/directoryA/directoryB

If the original URL request is GET /documents/ idex.html, the document root prefix will be appended directly in front of the first "/" of the original request In other words, the prefix "/directoryA/directoryB" will be appended to the front of "/documents/index.html".

There are situations where it is desirable to use another prefix instead of the document root prefix. Such situations include where a developer configures content directories outside the document root directory, aliases the name of a content directory, or applies an arbitrary transformation at the area level. There are mapping rules for these special situations, and, if the request matches one of these special mapping rules, the substitute expression (right hand side) of the mapping rule is the prefix appended to the request instead of the document root prefix. For instance, assume the following is a mapping rule for a particular branch:

/Special(.*)=/Foo$1

If the original request is GET /special/index. html, the prefix "/Foo" is added to "/index.html."

The area prefix is appended to the front of the document root prefix or, if applicable, the special prefix that replaces the document root prefix. The area prefix is derived by decoding the "cookie" transmitted with the original request. A cookie is a small amount of persistent data stored by the web browser and passed to the virtualization module **137**. A cookie can include various types of information (*e.g.*, the identity of the user, the identity of a user's session ("session ID"), port number, etc.), and one such type may be an indication of the path of the viewing area. In one embodiment, the cookie includes the actual area prefix. In another embodiment, the virtualization module extracts another type of information, such as a session ID or a port number, from the cookie and looks up the area prefix in an external look up table that maps the type of information extracted to area prefixes.

To continue the document root prefix example, if the area prefix derived from the cookie transmitted with the original request is "/iw-mount/default/main/workarea/joe", the transformed request will look as follows:

GET/iw-mount/default/main/workarea/joe/directoryA/directory B /documents/index.html.

Whether a web browser routes all HTTP requests to the virtualization module **137** or just some depends on the types of link contained within the HTML documents in the system. There are at least three different types of links which may be contained within an HTML document, namely a relative link, an absolute link, and a fully qualified link. A fully qualified link is a link that includes an explicit protocol specification and an explicit hostname followed by the full pathname to a document An absolute link is a link that contains neither a protocol specification nor a hostname, but does contain a full pathname to a document An absolute link usually starts with an initial slash character ('/'). A relative link is similar to an absolute link, but is instead characterized by the leading slash character ('/'), which indicates that the path is relative to the current document's link. In other words, a relative link has the same full path name of the current document except for the actual name of the document requested.

The virtualization module **137** can process all three types of links. If the HTML content stored within the system **100** requires virtualization of fully qualified links, the web browser is configured to send all requests to the virtualization module **137.** Many common web browsers support this feature with a configuration setting. According to one embodiment, if the website does not require management of fully qualified links, the web browser passes just absolute and relative HTML links to the virtualization module **137.** A web server usually requires no special configuration for absolute and relative links to be automatically sent to the virtualization module **137.**

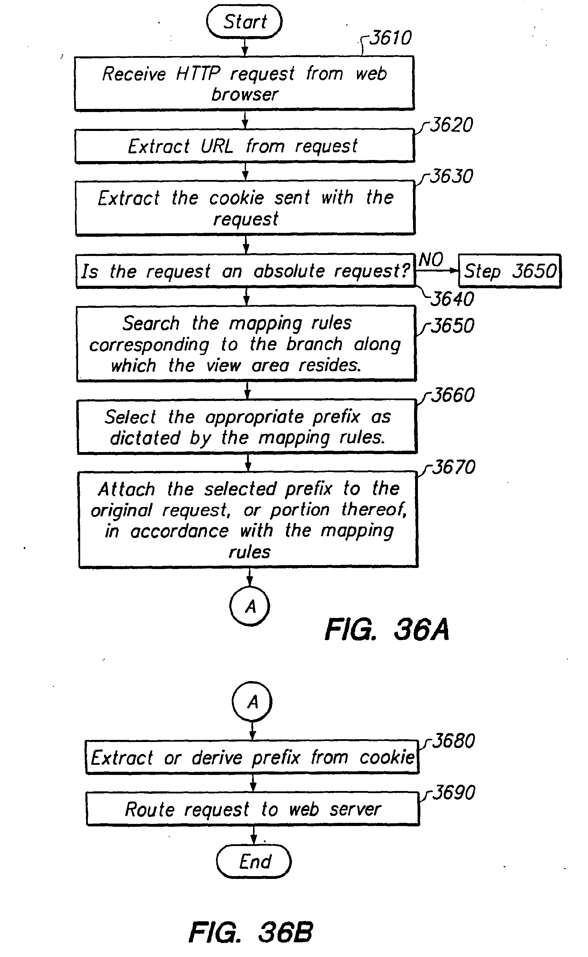

Figures **36a-b** illustrate the operation of virtualization module **137** for handling absolute and relative requests. The virtualization module **137** receives **3610** an HTTP request from a web browser on one of the development workstations **110,** and extracts **3620** the Uniform Resource Locator (URL) address from the request. The virtualization module **137** also extracts **3630** the cookie that has been sent with the URL address.

The virtualization module **137** then determines **3640** whether the request is an absolute request or a relative request. In one request embodiment, these requests are distinguished by the fact that a relative HTML request will already have an area prefix appended to it before it is processed by the virtualization module **137** (this is done automatically by the web browser), but an absolute request will not have an area prefix appended to it before it is processed by the virtualization module **137.** If the request is relative, the request is already directed to the correct file system and directories (i.e., the file system and directories from which the viewing document was accessed), and the virtualization module **137** passes **3690** the request to the web server.

If the request is an absolute request, the virtualization module **137** searches **3650** the mapping rules corresponding to the branch along which the viewing area resides and selects **3660** the appropriate prefix (either a document root prefix or a special prefix based on the mapping rules (as discussed above)). The virtualization module **137** attaches **3670** the selected prefix to the original request or a part thereof in accordance with the appropriate mapping rule.

The virtualization module **137** extracts or derives (as discussed above) **3680** the area prefix from the cookie and attaches it in front of the prefix attached in step **3670.** The path of the request, or a portion thereof, is now complete, and, therefore, the module **137** routes **3690** the modified request to web server **145.**

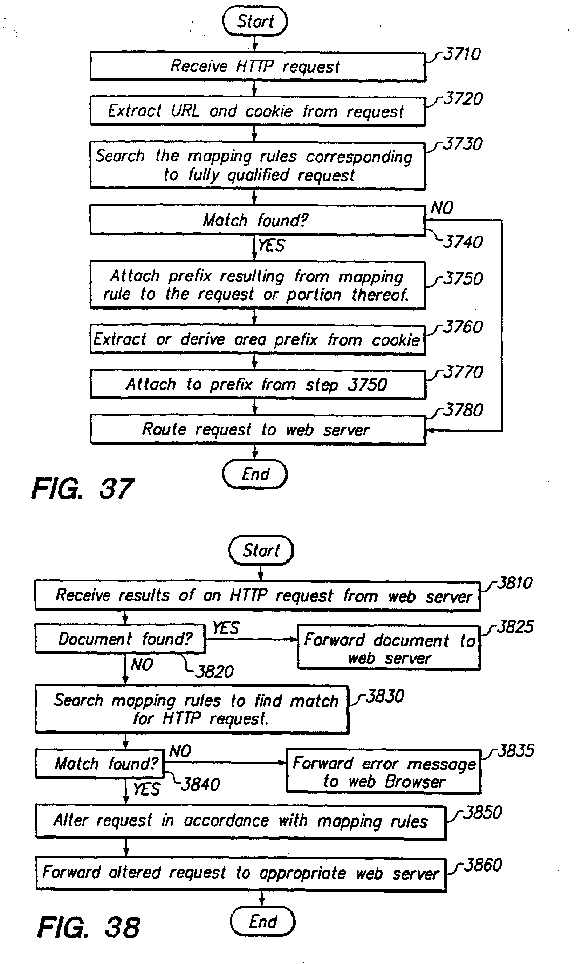

Figure **37** illustrates the method of the virtualization module **137** for processing fully qualified links. The virtualization module **137** receives **3710** an HTTP request from one of the web browsers on one of the development workstations **110,** and extracts **3720** the URL and the cookie from the request.

The virtualization module **137** then searches **3730** through mapping rules for fully qualified requests, and determines whether the request matches the regular expression of a mapping rule. If not, the request is forwarded **3780** to the web server as is. If so, the virtualization module **137** attaches **3756** the prefix resulting from the mapping rule to the request, or a portion thereof, in accordance with the mapping rule.

The virtualization module **137** extracts or derives (as discussed above) **3760** the area prefix from the cookie and attaches **3770** it to the front of the prefix attached in step **3750.** The path of the request is now complete, and the virtualization module **137** routes **3780** the modified request to web server **145.**

The virhralization module **137** allows dynamic splicing of content from an external web server. In some cases, a website may include content that is not managed by system **100.** In these cases, the virtualization module **137** enables a document request to be dynamically redirected to an external web server if the document does not reside at the location originally searched (e.g., the viewing area). If a document request returns with the HTTP error code '404 File not found', the virtualization module **137** searches the mapping rules, and, if a match is found, it alters the request in accordance with the matching rules. The altered request is then sent to the specified external destination web server.

The virtualization module **137** also provides for dynamic splicing of content from different branches. In some cases, website content may be segregated into different branches of development. In these instances, if the virtualization module **137** receives an error code '404 File not found,' the virhralization module **137** replaces the existing document root prefix with the document root prefix of another branch. The altered request is then sent to the web sever **145.**

Figure **38** illustrates the operation of the virtualization module for performing dynamic site-based or branch-based splicing. The virtualization module **137** receives the results of an HTTP request from the web server **145.** The virtualization module determines from the results whether the requested document was found. If so, the virtualization module forwards **3825** the requested document to the web browser that originally sent the request to the virtualization module **137.** If the document is not found, the virtualization module searches **3830** the mapping rules to determine **3840** whether the HTTP request or a portion thereof, sent to the web server matches the left hand side of any of the rules. If so, the request **3850** is altered in accordance with the mapping rules and forwarded **3860** to the appropriate web server.

As will be understood by those familiar with the art, the invention may be embodied in other specific forms without departing from the spirit or essential characteristics thereof. Website development is just one of many practical applications for the inventions disclosed herein. Other applications for the inventions disclosed herein include developing source code, media files (*e. g.*, for CD-ROM multimedia), a media engine, and etc. Accordingly, the disclosure of the present invention is intended to be illustrative, but not limiting, of the scope of the invention, which is set forth in the following claims.

**Claims**

1. A system for file management comprising:

    a plurality of work areas configured to each maintain a virtual copy of content of a website to provide each user of a work area a personal view of website content as it would appear on a website, each work area comprising a file system having read and write operations to enable users to edit files associated with the individual work areas; and
    a staging area configured to receive web content from multiple work areas and to detect whether web content submitted by any one work area does not conflict with other web content submitted to the staging area, the staging area further configured to retain versions of content submitted from the work areas.

2. A system according to Claim 1, wherein the work area is a file system stored within memory and having read and write operations to enable a user to edit virtual copies of files in the work area; and

wherein the staging area is a file system stored within memory and capable of receiving content from a work area, the staging area configured to maintain versions of content received from a work area as a virtual copy and an integration mechanism configured to integrate content received from a plurality of work areas.

3. The system of Claim 1 or 2, wherein the system is configured allow areas to share directory trees, so that files and directories do not need to be physically copied when an area is created.

4. The system of Claim 3, wherein the system further includes a virtualization module configured to allow different areas to share directory trees and to perform versioning operations to enable the development of a website using virtual copies of files and directories.

5. The system of Claim 3, wherein the system further includes a virtualization module configured to alter the directory path of a request sent from a web browser so that the directory path corresponds to a desired location to allow different areas to share directory trees and to perform versioning operations to enable the development of a website using virtual copies of files and directories.

6. The system of Claim 3, wherein the system further includes a virtualization module configured to receive a request sent by a web browser corresponding to a work area and forward the request to a web server so that the web server can retrieve the document from the location specified by the request, wherein the virtualization module is further configured to sent the requested document from the web server and to enable access to the document by the web browser.

7. The system of Claim 4, wherein the virtualization module is further configured to alter a request from a web browser using mapping rules to map one expression to another expression, wherein the mapping rules define how to modify the document root prefix and the area prefix of the request.

8. A method for developing a website comprising:

creating a virtual copy of a file containing data defining web content, wherein the virtual copy of the file allows a user in a work area to view and modify the web content in the context of a web page in which it may be incorporated; modifying web content in the work area; and submitting a virtual copy of modified web content from the work area to a staging area.

9. The method of Claim 8, further comprising, determining whether said other web content are in conflict with the web content submitted by the work area; and submitting the web content if there are no conflicts among the different content.

10. The method of Claim 9, further comprising, in response to said other content submitted to the staging area being in conflict with the content of the work area, rejecting the contents from being submitted to the staging area.

11. The method of Claim 9, further comprising, in response to the other content submitted to the staging area being in conflict with the content of the work area, refraining from submitting the content of the work area to the staging area.

12. The method of Claim 8, wherein determining whether web content submitted by a work area is in conflict with other web content submitted to the staging area further includes analyzing the content of the work area to determine whether the content of the work area shares a common ancestry with other content submitted to the staging area.

13. The method of one of Claims 9 to 12, wherein determining whether web content is in conflict with other web content submitted to the staging area further includes:

analyzing the content of the work area to determine whether it is the same content as and whether the content of the work area shares a common ancestry with other content submitted to the staging area; if the content of the work area does not share a common ancestry with other content submitted to the staging area, a conflict exists; and if the content of the work area shares a common ancestry with other content submitted to the staging area, a conflict does not exist and the content from the work area may be submitted to the staging area.

14. The method according to one of Claims 8 to 13, wherein creating a virtual copy of a file further comprises:

receiving a request from a web browser; extracting a URL from the request; extracting a cookie from the request; selecting a prefix according to a predetermined set of mapping rules; re-mapping the URL by associating the selected prefix with at least a portion of the original request according to the mapping rules, wherein the resulting URL corresponds to a user's work area; and
routing the request to the web server.

15. A method according to one of Claims 8 to 13, further comprising:

   receiving a request from a web browser;
   extracting a URL from the request;
   extracting a cookie from the request;
   determining whether the request is a fully qualified request;
   searching the mapping rules to find a prefix that matches the fully qualified request;
   if there is a match with a prefix in the mapping rules,

      attaching a prefix to at least a portion of the request according to the mapping rule;
      extracting an area prefix from the cookie;
      attaching the area prefix from the cookie to the prefix matched with the mapping rules wherein the resulting URL corresponds to a user's work area;
      routing the request to the webserver; and

   if there is not a match,

      routing the request to the webserver.

*FIG. 1*

BRANCH

330

320

310

Workareas

Staging Area

Edition 300

FIG. 3

START

210 — Developer edits, adds, and/or removes files in a work area.

220 — Contents of work area are submitted to staging area.

230 — Contents of work area is integrated w/contents of other contributors' work areas.

240 — Contents acceptable?

NO

YES

250 — Publish contents into an edition.

FIG. 2

FIG. 4

400

FIG. 5

**FIG. 6**

EP 1 235 146 A2

**FIG. 7**

Parent Branch — 720

710

Initial Edition   Edition 1   Edition 2

Previous Edition

Workareas

Staging Area

New Edition   Edition 3

Sub-Branch

725   740   750   760 — 730

Initial Edition

Workareas   740

Staging Area

New Edition   Edition 1

directory 1

directory 2    directory 3

directory 4    directory 5

Work Area

**FIG. 8**

name: WA1
generation ID: (1,0)
root dir: d1
object ID: 123
branch: b

Work Area Object

**FIG. 9**

Deriving a Generation ID from a parent Generation ID.

START

Obtain a unique, randomly or sequentially generated number — 1000

Retrieve the set of unique numbers associated with the parent generation ID — 1010

Create a set of numbers that is the union of the number obtained in step 1000 and the set of numbers obtained in step 1010 — 1020

End

**FIG. 10**

Edition "INITIAL"    Work area 2

derived from

G0

G2

derived from

G3

Work area 1

derived from

Edition 1    G1

derived from

Edition 2    G4

## FIG. 11

Creating a Work Area from Edition e.

START

Determine the generation ID and the root directory of edition e. ⌐1410

Obtain a new generation ID derived from the generation ID of edition e. ⌐1420

Obtain a new object ID. ⌐1425

Create an object having a name field, object ID field, a root directory field, a generation ID field, and a branch field. ⌐1430

Fill in name of work area in name field; fill in root directory of edition e in root directory field, fill in object ID (from step 1425) in object ID field, fill in derived generation ID in generation ID field, fill in branch in branch field. ⌐1440

End

## FIG. 14

**FIG. 12**

**FIG. 13**

Creating a Staging Area from Edition e.

START

Obtain the generation
ID of edition e. ⌐1510

Obtain a new generation
ID that is derived from
the generation ID of edition e. ⌐1520

Obtain a new object ID. ⌐1525

Create an object having a name field,
an object ID field, a root directory
field, a generation ID field, and
a branch field. ⌐1530

Fill in the name of the staging area in
the name field; fill in root directory
of edition e in root directory
field; fill in object ID (from
step 1525) in object ID field;
fill in derived generation ID in
generation ID field; fill in
branch in branch field. ⌐1540

End

**FIG. 15**

Creating an Edition from the Contents of Staging Area S

START

Obtain the generation ID &
root directory of staging area s.  ⌐1610

Obtain a unique object ID for the edition.  ⌐1615

Create object having a name field, a
root directory field, a generation
ID field, an object ID field, and
a branch field.  ⌐1620

Fill in the name field with the name
of the edition; Fill in the root directory
field with the root directory of
staging area s; Fill in the generation
ID field with the generation ID of
staging area s; Fill in the object ID
(from step 1615) in the object ID field;
Fill in branch identification in branch field.  ⌐1630

A

**FIG. 16A**

A

Obtaining a new generation ID.  ⌐1640

Assigning the new generation ID
to staging area s.  ⌐1650

End

**FIG. 16B**

Creating a Branch

START
↓
Creating a main branch? ─1705 ─YES→ (A)
↓
Obtain generation ID associated with base edition ("edition b"). ─1710
↓
Obtain a generation ID derived from generation ID of edition b. ─1715
↓
Create initial edition for branch ("edition e") with the same root directory as edition b and with the generation ID obtained in step 1715. ─1720
↓
(B)

**FIG. 17A**

(B)
↓
Create zero or more work areas, each having the same root directory as edition e and a generation ID derived from the generation ID of edition e. ─1730
↓
Create a staging area having the same root directory as edition e and a generation ID derived from the generation ID of edition e. ─1740
↓
End

**FIG. 17B**

**FIG. 18A**

Adding an item "n" with contents "r" to a directory "d" in area "a"

Start

1805 — Identify the generation of area a, call it g

1810 — Read directory d

1815 — Does directory d have a generation page for generation g?

YES → (to 1825)

NO ↓

1820 — Create generation page for generation g by copying the generation page of the most closely related parent generation

1825 — Scan the contents of generation page g for item n.

1835 — Does item n exist in generation page g?

NO → A

YES → B

**FIG. 17C**

A

1750 — Obtain a root generation ID, call it g0

1755 — Create an empty directory, call it d0

1760 — Create a history object, call it h0 for the directory

1765 — Add an entry (g0,d0) to the history object indicating that the history object is associated with the directory d0 in generation g0

1770 — Create an initial edition having directory d0 and root generation ID g0

1775 — Create one or more working area and a staging area, each having a different generation ID derived from the root generation and having the root directory of the initial edition

End

**FIG. 18C**

B →

1850 — Scan the contents of the history object associated with the file n f for the most recent generation in which file n was altered.

1855 — Was file "n" altered in generation g?  YES → C

NO ↓

1860 — Add an entry (g,f) to the history object indicating that the contents f were added to file n in generation g.

1865 — Set the previous field of f to point to the contents of "h" in the best match generation.

End

**FIG. 18B**

A →

1840 — Create new history object h having entry (f,g) indicating that contents f were added in generation g

1845 — Add an entry (n,h) to generation page g indicating that item n is associated with history object h.

End

**FIG. 18D**

C →

1870 — After the history object entry associated with generation g to reflect that contents f were added to item n in generation g.

1875 — Set the "previous field" of item f to point to the previous contents of n in generation g.

End

Adding Direct Reference of d to c in area a.

FIG. 19

## Remove Direct Reference of d to c in Area a

**FIG. 20**

Flow:
- Start
- 2010: Determine generation ID of area a, call it g
- 20: Is (g,d) in the reference list of s? — NO
- YES
- 2030: Remove (g,d) from the reference list of s
- 2040: For each child generation $g_i$ of g, if $(g_i,d)$ is <u>not</u> in the anti-reference list, then add $(g_i,d)$ to the reference list.
- 2050: Is (g,d) in the anti-reference list? — YES
- NO
- 2060: Add (g,d) to the anti-reference list
- End

**FIG. 21A**

Flow:
- Start
- 2110: Get the reference list from f
- 2120: Get the anti-reference list from f
- 2125: Get the generation ID of the root node of the geneology tree, call it g.
- 2130: Find all entries in the reference list with generation g. For each of these entries, add an entry (item name,+) to list p. If list p already contains an entry with the same item name (e.g., item name, −), set that entry to (item name, +)
- 2140: Find all entries in the anti-reference list with generation g. For each of these entries, add an entry (item name, −) to p. If p already contains an entry with the same item name, set that entry to (item name, −). — A

EP 1 235 146 A2

A

2150 — For each entry in list p that has an entry with a "+", set n=n+1

2160 — Does generation g have any children? —NO→ 2170 — End is the # of references to item f.

YES

2180 — For each child generation $g_i$, set g to the generation ID of the child generation

Go to step 2130

## FIG. 21B

Reading directory d in area a

Start

2210 — Obtain the generation ID of area a, call it g.

2220 — YES | Is there a generation page for generation g in directory d? | NO

2230 — Return list of the entries on generation page g

2240 — Return list of the entries on the generation page of the closest related parent generation

End

## FIG. 22

*Remove item "n" from directory "d" in area "a"
having generation ID "g".*

```
                        ( Start )
                            │
                            ▼
                   ┌─────────────────┐  ┌2310
                   │  Read directory │
                   └─────────────────┘
                            │
                            ▼
        ┌─────────────────────┐  ┌2320          ┌2330
        │   Is there generation│       ┌───────────────────┐
        │  page for generation │  NO   │ Create generation │
        │   g in directory d?  │──────▶│ page for generation│
        └─────────────────────┘       │ g from best match │
                            │          │    generation      │
                          YES          └───────────────────┘
                            │                    │
    2330┐                   ▼◀────────────────────┘
        ┌─────────────────────┐          ┌───────────────────┐
        │    Is there an entry │          │ Error. Item n does│
        │   corresponding  to  │─────────▶│not exist in director│
        │   item n in generation│         │   d in area a.    │
        │       page "g"?       │          └───────────────────┘
        └─────────────────────┘                  └2340
                            │
                          YES
                            ▼
        ┌─────────────────────┐  ┌2350
        │  Obtain history object│
        │ corresponding to item n.│
        └─────────────────────┘
                            │
                            ▼
        ┌─────────────────────┐  ┌2355
        │  Does history object │
     NO │ indicate that item n │ YES
 (B)◀───│   was modified in    │────▶( A )
        │  generation g (i.e, is│
        │ there en entry with "g"│
        │   as the generation?) │
        └─────────────────────┘
```

## FIG. 23A

A

B

2360

Alter history object to
indicate that n was
removed in generation g
(change entry w/"g", to (g,z)).

2370

Add an entry (g,z,) to
the history object, where
"z" represents that item n
was removed from directory d

2380

Change "previous" field of
z object so that it points
to the previous content
of n i generation g

End

## FIG. 23B

Editing a file "n" in work area a (generation g)
in directory d

Start

Receive write command
for file "n"

2405

Obtain history object
for file n

2410

Does the history
object have an entry
with generation g?

2420

NO

A

YES

Write changes to the
file associated with
generation g

2430

## FIG. 24A

End

A

**2440**

Find entry with the best match generation

**2450**

Copy file, call it f1, associated with entry in step 2440. Call new file f2

**2460**

Write changes to f2

**2470**

Add entry (g,f2) to history object. This indicates that in generation g the contents of file n are those of file f2.

End

**FIG. 24B**

---

Renaming item N1 in Directory d1 in area a to name n2 in directory d2 in area a

Start

2510 — Obtain the history object, call it h1, of file n1 in directory d1

2520 — Does an item n2 exist in directory d2 — **NO**

**YES**

2527 — Report that item n2 already exists in director d2

**YES**

Any overwrite protection? 2523 —

**NO**

2530 — Remove item n2 from directory d2

End

2540 — Add item n2 to directory d2 and associate history object h1 with item n2 in directory d2

End

**FIG. 25**

Generating a full name directory path for
directory d in area a

( Start )

Read directory d
in area a —2610

Obtain the directory
corresponding to the
name "..". This is the
B → parent directory to
directory d. Call this
parent directory $P_d$ —2620

Read the directory $P_d$
in area a. Find the
entry in dir $P_d$ that
contains dir d. —2630

d is a name in the
directory Path —2640

Set d to $P_d$ —2650

**FIG. 26A** ( A )

( A )

2660— Is dir d the root directory? —NO→ ( B )

↓YES

2670— Names found are names in the
directory path. Names found in
order of last to first.

**FIG. 26B**

Generating a base name for a history object h in
directory d in area a

```
         ( Start )
            │
            ▼
  ┌──────────────────┐  ╭ 2710
  │  Read directory  │
  └──────────────────┘
            │
            ▼
  ┌──────────────────┐  ╭ 2720
  │ Identify the entry (n,h) │
  │ having history object h. │
  │ The base name of the     │
  │ history object is "n".   │
  └──────────────────┘
            │
            ▼
         (  End  )
```

**FIG. 27**

Submitting an item "n" w/history object "h"
and contents "f" directory "d" in staging Area "a"
having generation ID "g".

```
              ( Start )
                 │
                 ▼
2805 ┐ ┌─────────────────────────┐
     │ Obtain the full path name of │
     │ h by computing the full path │
     │ name of d and the base name  │
     │ of h in area a.              │
     └─────────────────────────┘
                 │
                 ▼
2810 ┐ ┌─────────────────────────┐   NO   (A)
     │ Is there a corresponding full │────
     │ path name in the staging area? │
     └─────────────────────────┘
                 │ YES
                 ▼
2815 ┐ ┌─────────────────────────┐
     │ Is there a conflict between h │   NO   (A)
     │ and the corresponding history │────
     │ object, call it h_s           │
     └─────────────────────────┘
                 │ YES
                 ▼
2820 ┐ ┌─────────────────────────┐
     │           In            │   YES
     │      Overwrite mode?    │────
     └─────────────────────────┘
                 │ NO
                 ▼
2825 ┐ ┌─────────────────────────┐
     │       Submit fails      │────▶ ( End )
     └─────────────────────────┘
```

**FIG. 28A**

A

┌─────────────────────────────────────────────────────┐ ⌐2830
│ Does directory path computed in step 2805 exist      │
│               in the staging area?                    │
└─────────────────────────────────────────────────────┘

┌─────────────────────────────────────────────────────┐ ⌐2835
│      Create the directory path in the staging area    │
└─────────────────────────────────────────────────────┘

┌─────────────────────────────────────────────────────┐ ⌐2840
│                  Mark file f as frozen                │
└─────────────────────────────────────────────────────┘

┌─────────────────────────────────────────────────────┐ ⌐2845
│ Call add item module to add item n with contents      │
│        f and history object h to staging area a       │
└─────────────────────────────────────────────────────┘

┌─────────────────────────────────────────────────────┐ ⌐2850
│                  Add (g,f) entry to h                 │
└─────────────────────────────────────────────────────┘

┌─────────────────────────────────────────────────────┐  NO
│                  Is f a directory?                    │ ──────▶ ( End )
└─────────────────────────────────────────────────────┘
                                                      └2855

C

**FIG. 28B**

C

┌─────────────────────────────────┐ ⌐2860
│   For each child directory $d_i$, │
│   add an entry $(g,d_i)$ to the   │
│   history object associated with  │
│       $d_i$ in the work area      │
└─────────────────────────────────┘

( End )

**FIG. 28C**

Comparing directory $d_{target}$ in area $a_{target}$ against directory $d_{reference}$ in area $a_{reference}$

**Start** (3005)

Read contents of $d_{target}$ in $a_{target}$ (3010)

Read contents of $d_{reference}$ in $a_{reference}$ (3015)

Look at first item in $d_{target}$

Is there an item with the same name in $d_{reference}$? (3020)
- NO → Report no match (3045)
- YES ↓

Are the contents of the two items the same? (3025)
- YES → Report same name & contents (3030)
- NO ↓

Report same name, different contents (3035) → A

**FIG. 30A**

---

Checking File $f_{target}$ against File $f_{reference}$ for Conflict in Area $a_{target}$ in Branch b.

**Start**

Is $f_{target}$ locked in branch b? (2910)
- YES → Conflict. $f_{target}$ cannot be submitted to $a_{target}$ (2920)
- NO ↓

Is lock for $f_{target}$ owned by a different area than $a_{target}$? (2920)
- YES → No conflict (2930)
- NO ↓

Do $f_{target}$ and $f_{reference}$ point to the same content? (i.e, are $f_{target}$ & $f_{reference}$ the same?) (2930)
- YES → No conflict
- NO ↓

Is $f_{reference}$ an ancestor of $f_{target}$ (2940)
- YES → No conflict
- NO → conflict

**FIG. 29**

EP 1 235 146 A2

## FIG. 30B

```
        (A)
         │
         ▼                    ┌─3053
┌─────────────────┐  YES ┌─────────────┐
│ Is there another│─────▶│ Identify next│
│ item in d_target?│      │ item & go to │
└─────────────────┘      │  step 3020   │
  r3050                  └─────────────┘
         │
         ▼
┌─────────────────┐
│ Get the first   │──3055
│ item in         │
│ d_reference     │
└─────────────────┘
         │
         ▼                        ┌─3065
┌─────────────────┐  NO  ┌─────────────┐
│ Does the item   │─────▶│   Report    │
│ have the same   │      │     as      │
│ name as an item │      │ non-match   │
│ in d_target?    │      └─────────────┘
└─────────────────┘
         │ YES       └─3060
         ▼                             │
┌─────────────────┐◀───────────────────┘
│ Is there another│
│ item in         │  NO   ┌───────┐
│ d_reference?    │──────▶│  End  │
└─────────────────┘       └───────┘
         │ YES      └─3067
         ▼              ┌─3070
┌─────────────────┐
│ Get next item   │
│ in d_reference  │
└─────────────────┘
```

Is there another item in $d_{target}$?   YES   Identify next item & go to step 3020

Get the first item in $d_{reference}$

Does the item have the same name as an item in $d_{target}$?   NO   Report as non-match

Is there another item in $d_{reference}$?   NO   End

Get next item in $d_{reference}$

**FIG. 30B**

## Deleting an Area a

Start

Retrieve directory tree for area a   ┌3210

Find any childless node, call it the $c_{node}$   ┌3230

Remove the $c_{node}$ from its parents by calling the remove item module   ┌3240

Remove direct reference to the parent node from the $c_{node}$ by calling the remove direct reference module   ┌3250

Is the reference count of the $c_{node}$ zero?   YES   Delete physical object associated with node c from storage   ┌3270

NO   └3260

Any other nodes remaining in area?   ┌3280   NO   End

YES

**FIG. 32**

Comparing $F_{target}$ in directory $d_{target}$ to $F_{reference}$
in directory $d_{reference}$

```
                    ( Start )
                        |
                        v
  ┌─────────────────────────────────────────┐  ⌐3110
  │ Look up file, call it $f_t$, that contains │
  │ the contents of $F_{target}$ in $d_{target}$ │
  └─────────────────────────────────────────┘
                        |
                        v
  ┌─────────────────────────────────────────┐  ⌐3120
  │ Look up file, call it $f_r$, that contains │
  │ the contents of $F_{reference}$ in $d_{reference}$ │
  └─────────────────────────────────────────┘
                        |
                        v
  ┌─────────────────────────────────────────┐  ⌐3130
  │       Is $f_t$ the same as $f_r$?         │── YES ──
  └─────────────────────────────────────────┘
                        | NO
                        v
  ┌─────────────────────────────────────────┐  ⌐3145
  │ Is $F_{reference}$ an ancestor of $F_{target}$? │── YES ──
  └─────────────────────────────────────────┘
                        | NO
                        v
  ┌─────────────────────────────────────────┐  ⌐3155
  │ Is $F_{target}$ an ancestor of $F_{reference}$? │── YES ──
  └─────────────────────────────────────────┘
                        | NO
                        v
                      ( A )
```

3140
┌──────────────┐
│ Report that  │
│ $F_{target}$ and │
│ $F_{reference}$ │
│ are identical │
└──────────────┘
        |
        v
    ( End )

3150
┌──────────────┐
│ Report       │
│ $F_{target}$ is a │
│ modification │
│ of $F_{reference}$ │
└──────────────┘
        |
        v
    ( End )

3160
┌──────────────┐
│ Report that  │
│ $F_{reference}$ is │
│ a modification │
│ of $F_{target}$ │
└──────────────┘

## FIG. 31A

```
                      ( A )
                        |
                        v
  ┌─────────────────────────────────────────┐  ⌐3165
  │ Is there some file that is an ancestor   │── YES ──
  │ of both $F_{target}$ and $F_{reference}$? │
  └─────────────────────────────────────────┘
                        | NO
                        v
  ┌─────────────────────────────────────────┐  ⌐3175
  │ Report $F_{target}$ is unrelated to $F_{reference}$ │── → ( End )
  └─────────────────────────────────────────┘
```

3170
┌──────────────────┐
│ Report $F_{reference}$ │
│ and $F_{target}$ │
│ have a common    │
│ ancestor.        │
└──────────────────┘
        |
        v
    ( End )

## FIG. 31B

Creating a lock on item f in Directory d
in Area a in Branch b

```
        ( Start )
            │
            ▼                                    ⌐3310
┌─────────────────────────────┐
│ Obtain full path name of item·f in │
│     directory d in area a           │
└─────────────────────────────┘
            │
            ▼                                    ⌐3320
┌─────────────────────────────┐    YES
│     Does any other lock include     │─────▶ ( A )
│   a full path name that matches     │
│   the name computed in step 3310?   │
└─────────────────────────────┘
            │ NO
            ▼                                    ⌐3330
┌─────────────────────────────┐
│ Create a lock that includes the full│
│   path name created in step 3310    │
└─────────────────────────────┘
            │
            ▼                                    ⌐3340
┌─────────────────────────────┐
│    Mark the lock with area a as     │
│       the owner of the lock.        │
└─────────────────────────────┘
            │
            ▼
         ( End )
```

## FIG. 33A

```
         ( A )
            │
            ▼                    ⌐3250
┌─────────────────────┐
│  Report lock creation │
│   failed because of   │
│    conflicting lock   │
└─────────────────────┘
            │
            ▼
         ( End )
```

## FIG. 33B

Determining whether an item f in
Directory d in Area a is locked

```
        ( Start )
            │
            ▼                                ⌐3410
┌─────────────────────────┐
│  Obtain the full name of item │
│   f in directory d in area a  │
└─────────────────────────┘
            │
            ▼                                        ⌐3430
┌─────────────────────────┐  NO   ┌──────────┐
│   Does branch b have a lock   │──────▶│  Report  │
│  having the full path name    │       │ item f not│
│    computed in step 3410      │       │  locked  │
└─────────────────────────┘       └──────────┘
            │ YES
            │         ⌐3420
            ▼                    ⌐3440
┌─────────────────────────┐
│  Report that item f is locked │
└─────────────────────────┘
            │
            ▼
         ( End )      FIG. 34
```

**FIG. 35**

EP 1 235 146 A2

EP 1 235 146 A2

Start

Receive HTTP request from web browser ⟋3610

Extract URL from request ⟋3620

Extract the cookie sent with the request ⟋3630

Is the request an absolute request? —NO→ Step 3650

⟍3640

Search the mapping rules corresponding to the branch along which the view area resides. ⟋3650

Select the appropriate prefix as dictated by the mapping rules. ⟋3660

Attach the selected prefix to the original request, or portion thereof, in accordance with the mapping rules ⟋3670

A

**FIG. 36A**

A

Extract or derive prefix from cookie ⟋3680

Route request to web server ⟋3690

End

**FIG. 36B**

Start

Receive HTTP request — 3710

Extract URL and cookie from request — 3720

Search the mapping rules corresponding to fully qualified request — 3730

Match found? — 3740    NO

YES

Attach prefix resulting from mapping rule to the request or portion thereof. — 3750

Extract or derive area prefix from cookie — 3760

Attach to prefix from step 3750 — 3770

Route request to web server — 3780

End

**FIG. 37**

Start

Receive results of an HTTP request from web server — 3810

Document found? — 3820    YES → Forward document to web server — 3825

NO

Search mapping rules to find match for HTTP request. — 3830

Match found? — 3840    NO → Forward error message to web Browser — 3835

YES

Alter request in accordance with mapping rules — 3850

Forward altered request to appropriate web server — 3860

End

**FIG. 38**